# EUROPEAN PATENT APPLICATION

(11) **EP 4 561 083 A1**
(43) Date of publication of application: **28.05.2025**
(21) Application number: 23899789.4
(22) Date of filing: 23.11.2023
(51) Int. Cl.: H04N 23/57

(54) **LIFTING/LOWERING APPARATUS, CAMERA APPARATUS, AND ELECTRONIC DEVICE**

(30) Priority: 06.12.2022 CN 202211557911
(71) Applicant: Huawei Technologies Co., Ltd., Shenzhen, Guangdong 518129 (CN)
(72) Inventor: LIU, Xukun, Shenzhen, Guangdong 518129 (CN); YANG, Jiangtao, Shenzhen, Guangdong 518129 (CN); YIN, Jie, Shenzhen, Guangdong 518129 (CN)
(74) Representative: MERH-IP Matias Erny Reichl Hoffmann Patentanwälte PartG mbB
(86) International application number: PCT/CN2023/133614
(87) International publication number: WO 2024/120210

(57) **Abstract**

This application provides a lifting apparatus, a camera apparatus, and an electronic device. The lifting apparatus includes a carrier member, a rotating member, a lifting member, a first magnetic induction sensor, and a first magnetic member. The rotating member is rotatably disposed on the carrier member, the rotating member and the lifting member fit with each other, and the rotating member is configured to drive the lifting member to lift or lower in a rotation process. One of the first magnetic induction sensor and the first magnetic member is connected to the rotating member, and the other of the first magnetic induction sensor and the first magnetic member is connected to the carrier member. The first magnetic member is configured to generate a first magnetic field, the first magnetic induction sensor is located in the first magnetic field, and the rotating member is configured to drive, in the rotation process, one of the first magnetic induction sensor and the first magnetic member to move toward or away from the other. Therefore, the lifting apparatus, the camera apparatus, and the electronic device provided in this application can improve imaging quality of the camera apparatus and the electronic device.

## Description

This application claims priority to Chinese Patent Application No. 202211557911.5, filed with the China National Intellectual Property Administration on December 6, 2022 and entitled "LIFTING APPARATUS, CAMERA APPARATUS, AND ELECTRONIC DEVICE", which is incorporated herein by reference in its entirety.

### TECHNICAL FIELD

This application relates to the field of terminal technologies, and in particular, to a lifting apparatus, a camera apparatus, and an electronic device.

### BACKGROUND

An image shooting function is already an indispensable function for an electronic device (for example, a mobile phone or a tablet computer). A camera hole may be provided in a display of an electronic device, so that a camera apparatus gathers light through the camera hole.

In a related technology, a camera apparatus may be configured as a lifting structure. During image shooting, the entire camera apparatus is driven to extend out of a side wall of an electronic device, so that a camera hole may not be provided in a display. This improves a screen-to-body ratio of the display and reduces impact on display effect of the display.

However, imaging quality of the camera apparatus needs to be improved.

### SUMMARY

Embodiments of this application provide a lifting apparatus, a camera apparatus, and an electronic device, so that imaging quality of the camera apparatus and the electronic device can be improved.

A first aspect of embodiments of this application provides a lifting apparatus. The lifting apparatus includes a carrier member, a rotating member, a lifting member, a first magnetic induction sensor, and a first magnetic member. The rotating member is rotatably disposed on the carrier member, the rotating member and the lifting member fit with each other, and the rotating member is configured to drive the lifting member to lift or lower in a rotation process. One of the first magnetic induction sensor and the first magnetic member is connected to the rotating member, and the other of the first magnetic induction sensor and the first magnetic member is connected to the carrier member. The first magnetic member is configured to generate a first magnetic field, the first magnetic induction sensor is located in the first magnetic field, and the rotating member is configured to drive, in the rotation process, one of the first magnetic induction sensor and the first magnetic member to move toward or away from the other.

The lifting apparatus provided in this embodiment of this application may include a carrier member, a rotating member, a lifting member, a first magnetic induction sensor, and a first magnetic member. The rotating member is rotatably disposed on the carrier member, the rotating member and the lifting member fit with each other, and the rotating member is configured to drive the lifting member to lift or lower in a rotation process. After the lifting member lifts relative to the rotating member, because a size between the lifting member and the rotating member increases in a thickness direction of the lifting apparatus, a size of the lifting apparatus increases in the thickness direction, a size of the camera apparatus equipped with the camera module increases, and a total track length of a lens of the camera apparatus increases. This improves imaging quality of the camera apparatus and an electronic device. In addition, after the lifting member lowers, the size of the lifting apparatus decreases, reducing impact of the lifting apparatus on the size of the camera apparatus and a size of the electronic device. One of the first magnetic induction sensor and the first magnetic member is connected to the rotating member, and the other of the first magnetic induction sensor and the first magnetic member is connected to the carrier member. The first magnetic member is configured to generate a first magnetic field. The first magnetic induction sensor is located in the first magnetic field, and is configured to sense strength of the first magnetic field. The rotating member is configured to drive, in the rotation process, one of the first magnetic induction sensor and the first magnetic member to move toward or away from the other. When a distance between the first magnetic induction sensor and the first magnetic member is short, the strength of the first magnetic field sensed by the first magnetic induction sensor is higher. When the distance between the first magnetic induction sensor and the first magnetic member is long, the strength of the first magnetic field sensed by the first magnetic induction sensor is lower. The first magnetic induction sensor senses the strength of the first magnetic field and generates a corresponding electrical signal, and determines a rotation angle of the rotating member based on the electrical signal, to determine whether the rotating member rotates to a required position (or is stuck), and determine whether the lifting apparatus lifts or lowers to a required position. If the camera apparatus does not lift or lower to a required position, the rotating member may be further controlled to rotate to the required position, and to lift or lower the lifting apparatus and the camera apparatus to required positions. This avoids impact on imagikng quality and a service life of the camera apparatus.

In a possible implementation, there are two first magnetic members, the two first magnetic members are spaced apart in a circumferential direction of the rotating member, and the rotating member is configured to drive, in the rotation process, the first magnetic induction sensor and one of the two first magnetic members to move toward each other, and the first magnetic induction sensor and the other of the two first magnetic members to move away from each other.

In this case, in the circumferential direction of the rotating member, first magnetic fields of the two first magnetic members cover a large range, and in an entire rotation process of the rotating member, the first magnetic induction sensor may be located in the first magnetic fields, so that the rotation angle of the rotating member can be effectively measured. **In** addition, a total extension length and bending angles of the two first magnetic members may be set to be small, to help reduce costs, disposition difficulty, and the like of the first magnetic member.

In a possible implementation, south pole-to-north pole directions of the two first magnetic members are opposite to each other in an axial direction of the rotating member; or south pole-to-north pole directions of the two first magnetic members are the same as the circumferential direction of the rotating member.

In this way, the two first magnetic members are disposed in a large quantity of manners, and can be used in a large quantity of scenarios.

In a possible implementation, the carrier member includes a carrier base and a carrier circuit board that are connected to each other, and the rotating member is rotatably disposed on the carrier base.

In a possible implementation, the carrier circuit board includes a first carrier circuit board, the first magnetic induction sensor is connected to the first carrier circuit board, and the first magnetic member is connected to the rotating member.

In this case, when the first magnetic induction sensor is connected to the carrier member, a mechanical part that is configured to connect to a control member is not pulled in the rotation process when the first magnetic induction sensor is connected to the rotating member.

In a possible implementation, the lifting apparatus further includes a first magnetic isolator, where the first magnetic induction sensor is located on a side that is of the first carrier circuit board and that faces the first magnetic member, and the first magnetic isolator is located on a side that is of the first carrier circuit board and that is away from the first magnetic member.

In this way, the first magnetic isolator is configured to reduce interference from an external magnetic field to the first magnetic induction sensor.

In a possible implementation, the lifting apparatus includes a second magnetic induction sensor and a second magnetic member, where one of the second magnetic induction sensor and the second magnetic member is connected to the lifting member, and the other of the second magnetic induction sensor and the second magnetic member is connected to the carrier member; and the second magnetic member is configured to generate a second magnetic field, the second magnetic induction sensor is located in the second magnetic field, and the lifting member is configured to drive, in a lifting or lowering process, one of the second magnetic induction sensor and the second magnetic member to move toward or away from the other.

In this case, the second magnetic induction sensor and the second magnetic member cooperate with the control member, and may be configured to determine whether the lifting member lifts or lowers to a required position or is stuck.

In a possible implementation, the carrier circuit board includes a second carrier circuit board, the second magnetic induction sensor is connected to the second carrier circuit board, and the second magnetic member is connected to the lifting member.

In this case, when the second magnetic induction sensor is connected to the carrier member, a mechanical part that is configured to connect to a control member is not pulled in the rotation process when the second magnetic induction sensor is connected to the rotating member.

In a possible implementation, the lifting apparatus further includes a second magnetic isolator, where the second magnetic induction sensor is located on a side that is of the second carrier circuit board and that faces the second magnetic member, and the second magnetic isolator is located on a side that is of the second carrier circuit board and that is away from the second magnetic member.

In this way, the second magnetic isolator is configured to reduce interference from an external magnetic field to the second magnetic induction sensor.

In a possible implementation, a guide member is disposed on one of the rotating member and the lifting member, a guide passage is disposed on the other of the rotating member and the lifting member, the guide passage is tilted relative to a lifting direction or a lowering direction of the lifting member, a protrusion is disposed on the guide member, and the protrusion is inserted into the guide passage, and reciprocates in an extension direction of the guide passage.

In this way, structures of the guide member and the guide passage are simple.

In a possible implementation, in the lifting direction or the lowering direction of the lifting member, an inner wall surface of the guide passage includes a first drive surface and a second drive surface that are oppositely disposed and spaced apart, and the protrusion is located between the first drive surface and the second drive surface; and at least one of the first drive surface and the second drive surface is a plane; or at least one of the first drive surface and the second drive surface is a curved surface, and the curved surface is bent toward the lowering direction of the lifting member.

In this way, when there are a large quantity of shapes of the drive surface, a large quantity of scenarios may be applied.

In a possible implementation, the lifting apparatus includes a drive member. The drive member includes a drive member body and a drive shaft, the drive shaft is rotatably connected to the drive member body, the drive shaft includes a first shaft end and a second shaft end that are opposite to each other, and the first shaft end fits with the rotating member.

In a possible implementation, the drive member further includes an anti-creep member. The anti-creep member includes an elastic part and a fastening part that are connected to each other. The fastening part is connected to a side that is of the drive member body and that is away from the first shaft end. The elastic part abuts against the second shaft end.

In this case, the elastic part applies an elastic acting force to the second shaft end, to alleviate creeping of the drive shaft in the axial direction of the worm, and avoid sticking cause by the drive shaft squeezing a mechanical part inside the drive member body. In addition, the anti-creep member may further protect the second shaft end.

In a possible implementation, the lifting apparatus further includes a worm, where the first shaft end is inserted into the worm in an axial direction of the worm; and the first shaft end is in interference fit with the worm, or the first shaft end is welded to the worm, or the first shaft end and the worm are integrated.

In this way, the worm is connected to the first shaft end in a large quantity of manners, and can be used in a large quantity of scenarios.

A second aspect of embodiments of this application provides a camera apparatus, including a camera module and the lifting apparatus in the first aspect, where the camera module is connected to the lifting apparatus.

The camera apparatus provided in this embodiment of this application may include a lifting apparatus. The lifting apparatus may include a carrier member, a rotating member, a lifting member, a first magnetic induction sensor, and a first magnetic member. The rotating member is rotatably disposed on the carrier member, the rotating member and the lifting member fit with each other, and the rotating member is configured to drive the lifting member to lift or lower in a rotation process. After the lifting member lifts relative to the rotating member, because a size between the lifting member and the rotating member increases in a thickness direction of the lifting apparatus, a size of the lifting apparatus increases in the thickness direction, a size of the camera apparatus equipped with the camera module increases, and a total track length of a lens of the camera apparatus increases. This improves imaging quality of the camera apparatus and an electronic device. In addition, after the lifting member lowers, the size of the lifting apparatus decreases, reducing impact of the lifting apparatus on the size of the camera apparatus and a size of the electronic device. One of the first magnetic induction sensor and the first magnetic member is connected to the rotating member, and the other of the first magnetic induction sensor and the first magnetic member is connected to the carrier member. The first magnetic member is configured to generate a first magnetic field. The first magnetic induction sensor is located in the first magnetic field, and is configured to sense strength of the first magnetic field. The rotating member is configured to drive, in the rotation process, one of the first magnetic induction sensor and the first magnetic member to move toward or away from the other. When a distance between the first magnetic induction sensor and the first magnetic member is short, the strength of the first magnetic field sensed by the first magnetic induction sensor is higher. When the distance between the first magnetic induction sensor and the first magnetic member is long, the strength of the first magnetic field sensed by the first magnetic induction sensor is lower. The first magnetic induction sensor senses the strength of the first magnetic field and generates a corresponding electrical signal, and determines a rotation angle of the rotating member based on the electrical signal, to determine whether the rotating member rotates to a required position (or is stuck), and determine whether the lifting apparatus lifts or lowers to a required position. If the camera apparatus does not lift or lower to a required position, the rotating member may be further controlled to rotate to the required position, and to lift or lower the lifting apparatus and the camera apparatus to required positions. This avoids impact on imaging quality and a service life of the camera apparatus.

A third aspect of embodiments of this application provides an electronic device, including a housing and the camera apparatus according to the second aspect, where the camera apparatus is at least partially located in the housing.

The electronic device provided in this embodiment of this application may include a lifting apparatus. The lifting apparatus may include a carrier member, a rotating member, a lifting member, a first magnetic induction sensor, and a first magnetic member. The rotating member is rotatably disposed on the carrier member, the rotating member and the lifting member fit with each other, and the rotating member is configured to drive the lifting member to lift or lower in a rotation process. After the lifting member lifts relative to the rotating member, because a size between the lifting member and the rotating member increases in a thickness direction of the lifting apparatus, a size of the lifting apparatus increases in the thickness direction, a size of the camera apparatus equipped with the camera module increases, and a total track length of a lens of the camera apparatus increases. This improves imaging quality of the camera apparatus and an electronic device. In addition, after the lifting member lowers, the size of the lifting apparatus decreases, reducing impact of the lifting apparatus on the size of the camera apparatus and a size of the electronic device. One of the first magnetic induction sensor and the first magnetic member is connected to the rotating member, and the other of the first magnetic induction sensor and the first magnetic member is connected to the carrier member. The first magnetic member is configured to generate a first magnetic field. The first magnetic induction sensor is located in the first magnetic field, and is configured to sense strength of the first magnetic field. The rotating member is configured to drive, in the rotation process, one of the first magnetic induction sensor and the first magnetic member to move toward or away from the other. When a distance between the first magnetic induction sensor and the first magnetic member is short, the strength of the first magnetic field sensed by the first magnetic induction sensor is higher. When the distance between the first magnetic induction sensor and the first magnetic member is long, the strength of the first magnetic field sensed by the first magnetic induction sensor is lower. The first magnetic induction sensor senses the strength of the first magnetic field and generates a corresponding electrical signal, and determines a rotation angle of the rotating member based on the electrical signal, to determine whether the rotating member rotates to a required position or is stuck.

The structure, other objectives, and beneficial effects of this application are clearer and more understandable through descriptions of preferred embodiments with reference to accompanying drawings.

### BRIEF DESCRIPTION OF DRAWINGS

FIG. 1 is a diagram of a structure of an electronic device according to an embodiment of this application;
FIG. 2 is a diagram of a structure of a camera apparatus assembled on an electronic device according to an embodiment of this application;
FIG. 3 is an exploded view of an electronic device according to an embodiment of this application;
FIG. 4 is a top view of a camera apparatus according to an embodiment of this application;
FIG. 5 is a diagram of a structure of a drive assembly assembled on a carrier base according to an embodiment of this application;
FIG. 6 is a diagram of a structure of a camera apparatus according to an embodiment of this application;
FIG. 7 is an exploded view of a camera apparatus according to an embodiment of this application;
FIG. 8 is a sectional view of FIG. 4 in an E-E direction;
FIG. 9 is a diagram of a structure of a guide member disposed on a rotating member according to an embodiment of this application;
FIG. 10 is a sectional view of a lifting member, a guide member, and a rotating member according to an embodiment of this application;
FIG. 11 is a sectional view of a lifting member and a protrusion according to an embodiment of this application;
FIG. 12 is a diagram of a correspondence between a height of a guide passage and a rotation angle of a rotating member according to an embodiment of this application;
FIG. 13 is a diagram of a correspondence between a rotation angle of a rotating member and a lifting driving force according to an embodiment of this application;
FIG. 14 is a diagram of structures of a drive member, a carrier circuit board, and a lifting module according to an embodiment of this application;
FIG. 15 is a diagram of structures of a drive member and a carrier circuit board according to an embodiment of this application;
FIG. 16 is a diagram of a correspondence between a rotation angle of a rotating member and strength of a first magnetic field sensed by a first magnetic induction sensor according to an embodiment of this application;
FIG. 17 is a diagram of structures of a carrier circuit board and a lifting module according to an embodiment of this application;
FIG. 18 is another diagram of structures of a drive member and a carrier circuit board according to an embodiment of this application;
FIG. 19 is a diagram of a relationship of connection among a lifting apparatus, a battery, and a control member according to an embodiment of this application;
FIG. 20 is a diagram of a correspondence between a lifting or lowering distance of a lifting member and strength of a second magnetic field sensed by a second magnetic induction sensor according to an embodiment of this application;
FIG. 21 is a diagram of structures of a drive cover and a part of a first drive assembly mounted on a first carrier part according to an embodiment of this application;
FIG. 22 is a diagram of a structure of a part of a first drive assembly mounted on a first carrier part according to an embodiment of this application;
FIG. 23 is a diagram of structures of a drive member and a drive circuit board according to an embodiment of this application; and
FIG. 24 is a diagram of a structure in which a first transmission member is a worm according to an embodiment of this application.

### Reference numerals:

100: electronic device; 110: display; 120: rear cover;
121: mounting hole; 130: middle frame; 131: side frame;
132: middle plate; 140: main circuit board; 150: battery;
200: camera apparatus; 210: carrier member; 211: carrier base;
2111: first carrier part; 2112: second carrier part; 2113: drive accommodating groove;
2114: slide rail; 2115: first arc surface; 2116: hollow area;
212: carrier circuit board; 2121: first carrier circuit board; 2122: second carrier circuit board;
213: sub-circuit board; 220: camera module; 230: rotating member;
231: first accommodating groove; 232: second arc surface; 233: gear structure;
234: assembly part; 240: lifting member; 242: second accommodating groove;
250: guide member; 251: first end; 252: second end;
253: protrusion; 260: guide passage; 260a: first passage;
260b: second passage; 261: first drive surface; 262: second drive surface;
263: stop wall; 271: first magnetic induction sensor; 272: first magnetic member;
2721: first sub-magnetic member; 2722: second sub-magnetic member; 273: second magnetic induction sensor;
274: second magnetic member; 275: first magnetic isolator; 276: second magnetic isolator;
281: top protective cover; 282: light-transmitting member; 283: light-transmitting hole;
291: worm gear; 2922: second gear; 2923: third gear;
293: drive member; 2931: drive member body; 2932: drive shaft;
2932a: first shaft end; 295: drive cover; 296: worm;
297: gear shaft; 298: drive circuit board; 299: anti-creep member;
2991: fastening part; 2992: elastic part; 300a: position detection module;
300b: power module; 300c: transmission module; 300d: lifting module.

### DESCRIPTION OF EMBODIMENTS

Terms used in implementations of this application are only used to explain specific embodiments of this application, but are not intended to limit this application.

In a related technology, an electronic device may include a housing and a camera apparatus. The camera apparatus is located in the housing, and the housing protects the camera apparatus. The camera apparatus may be configured as a lifting structure. During image shooting, a drive assembly may drive the camera apparatus to extend out of a side wall of the housing to the outside of the housing, so that the camera apparatus gathers light, and a camera hole may not be provided in a display of the electronic device. This improves a screen-to-body ratio of the display and reduces impact on display effect of the display.

However, because the camera apparatus is located in the housing, in order to avoid impact of the camera apparatus on a thickness of the housing, a thickness of the camera apparatus is small. Therefore, when the camera apparatus is located in the housing, a total track length of a lens is small. In addition, when the camera apparatus lifts, the entire camera apparatus extends out of the housing, and the camera apparatus remains unchanged in thickness after extending out of the housing. As a result, a total track length of the lens is still small after the camera apparatus extends out of the housing, resulting in poor imaging quality of the camera apparatus and the electronic device. In addition, if the camera apparatus does not lift to a required position, light gathering of the camera apparatus, an optical path of the camera apparatus, and the like may be affected. As a result, the imaging quality of the camera apparatus and the electronic device is affected. If the camera apparatus does not lower to a required position, the housing is not able to protect the camera apparatus well, affecting a service life of the camera apparatus. Because whether the camera apparatus lifts or lowers to a required position cannot be determined, it cannot be further determined whether the drive assembly needs to be controlled again to drive the camera apparatus to perform lifting or lowering movement to lift or lower the camera apparatus to the required position.

Based on the foregoing problem, embodiments of this application provide a lifting apparatus, a camera apparatus, and an electronic device. The lifting apparatus may include a carrier member, a rotating member, a lifting member, a first magnetic induction sensor, and a first magnetic member. The rotating member is rotatably disposed on the carrier member, the rotating member and the lifting member fit with each other, and the rotating member is configured to drive the lifting member to lift or lower in a rotation process. After the lifting member lifts relative to the rotating member, because a size between the lifting member and the rotating member increases in a thickness direction of the lifting apparatus, a size of the lifting apparatus increases in the thickness direction, a size of the camera apparatus equipped with the camera module increases, and a total track length of a lens of the camera apparatus increases. This improves imaging quality of the camera apparatus and an electronic device. In addition, after the lifting member lowers, the size of the lifting apparatus decreases, reducing impact of the lifting apparatus on the size of the camera apparatus and a size of the electronic device. One of the first magnetic induction sensor and the first magnetic member is connected to the rotating member, and the other of the first magnetic induction sensor and the first magnetic member is connected to the carrier member. The first magnetic member is configured to generate a first magnetic field. The first magnetic induction sensor is located in the first magnetic field, and is configured to sense strength of the first magnetic field. The rotating member is configured to drive, in the rotation process, one of the first magnetic induction sensor and the first magnetic member to move toward or away from the other. When a distance between the first magnetic induction sensor and the first magnetic member is short, the strength of the first magnetic field sensed by the first magnetic induction sensor is higher. When the distance between the first magnetic induction sensor and the first magnetic member is long, the strength of the first magnetic field sensed by the first magnetic induction sensor is lower. The first magnetic induction sensor senses the strength of the first magnetic field and generates a corresponding electrical signal, and determines a rotation angle of the rotating member based on the electrical signal, to determine whether the rotating member rotates to a required position (or is stuck), and determine whether the lifting apparatus lifts or lowers to a required position. If the camera apparatus does not lift or lower to a required position, the control member may automatically control the rotating member to rotate (or a user may further control the rotating member to rotate), to rotate the rotating member to a required position, and to lift or lower the lifting apparatus and the camera apparatus to required positions. This avoids impact on imaging quality and a service life of the camera apparatus.

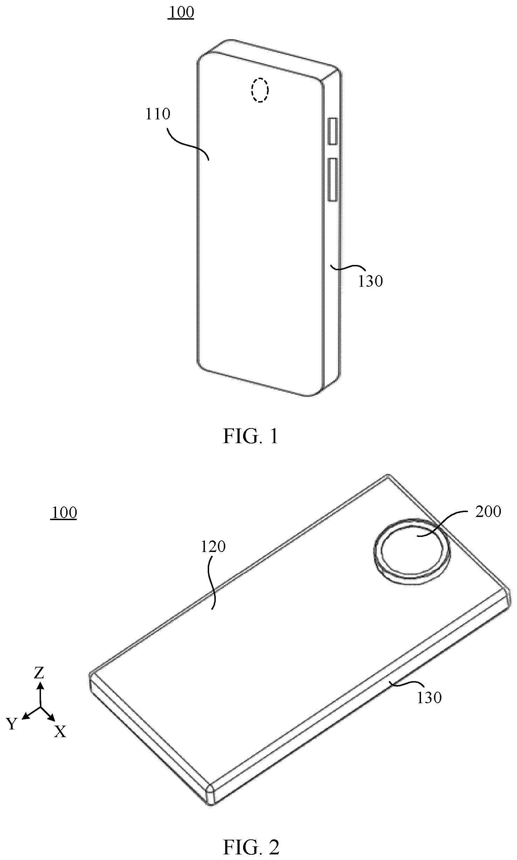

The following describes the electronic device 100 provided in embodiments of this application with reference to FIG. 1 to FIG. 24.

An embodiment of this application provides an electronic device 100. The electronic device 100 may include but is not limited to a mobile terminal or a fixed terminal, for example, a mobile phone, a tablet computer, a notebook computer, an ultra-mobile personal computer (ultra-mobile personal computer, UMPC), a handheld computer, a two way radio, a netbook, a POS terminal, a personal digital assistant (personal digital assistant, PDA), a dashcam, or a security protection device.

In this embodiment of this application, FIG. 1 and FIG. 2 use an example in which a mobile phone is the electronic device 100 for description. The mobile phone may be a foldable mobile phone. The foldable mobile phone may be an inward foldable mobile phone (that is, a display 110 folds inward), or an outward foldable mobile phone (that is, the display 110 folds outward). Alternatively, the mobile phone may be a bar-type mobile phone.

In this embodiment of this application, a bar-type mobile phone is used as an example.

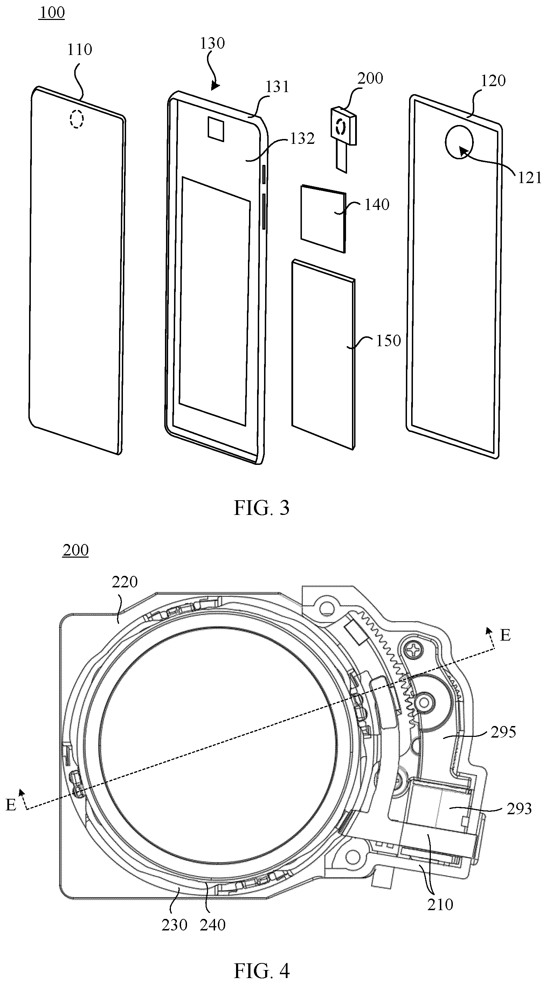

Refer to FIG. 3. The mobile phone may include the display 110, a rear cover 120, and a middle frame 130, a main circuit board 140, and a battery 150 that are located between the display 110 and the rear cover 120. The main circuit board 140 and the battery 150 may be disposed on the middle frame 130. For example, the main circuit board 140 and the battery 150 are disposed on a side that is of the middle frame 130 and that faces the rear cover 120, or the main circuit board 140 and the battery 150 may be disposed on a side that is of the middle frame 130 and that faces the display 110. When the main circuit board 140 is disposed on the middle frame 130, an opening may be provided in the middle frame 130, to place an element on the main circuit board 140 at the opening of the middle frame 130.

The battery 150 may be connected to a charging management module and the main circuit board 140 through a power management module. The power management module receives an input of the battery 150 and/or the charging management module, and supplies power to a processor, an internal memory, an external memory, the display 110, a camera, a communication module, and the like. The power management module may be further configured to monitor parameters such as a capacity of the battery 150, a cycle count of the battery 150, and a state of health (electric leakage and impedance) of the battery 150. In some other embodiments, the power management module may also be disposed in a processor of the main circuit board 140. In some other embodiments, the power management module and the charging management module may alternatively be disposed in a same device.

The display 110 may be an organic light-emitting diode (Organic Light-Emitting Diode, OLED) display, or a liquid crystal display (Liquid Crystal Display, LCD).

The rear cover 120 may be a rear metal cover, a rear glass cover, a rear plastic cover, or a rear ceramic cover. A material of the rear cover 120 is not limited in embodiments of this application.

Still refer to FIG. 3. The middle frame 130 may include a middle plate 132 and a side frame 131. The side frame 131 may be disposed around a periphery of the middle plate 132. The side frame 131 may include a top side frame, a bottom side frame, a left side frame, and a right side frame. The top side frame, the bottom side frame, the left side frame, and the right side frame form a circular side frame 131. A material of the middle plate 132 may be aluminum, aluminum alloy, or magnesium alloy. The material of the middle plate 132 is not limited. The side frame 131 may be a metal side frame, or a ceramic side frame. A material of the side frame 131 is not limited. The middle plate 132 and the side frame 131 may be interlocked, welded, bonded, or integrally formed, or the middle plate 132 is fastened to the side frame 131 through injection molding.

In some other examples, the mobile phone may include but is not limited to a structure shown in FIG. 3. For example, the mobile phone may include a display 110, a middle plate 132, and a housing, and the housing may include a side frame 131 and a rear cover 120. For example, the housing may be a housing integrally formed by the side frame 131 and the rear cover 120. Both a main circuit board 140 and a battery 150 may be located in accommodation space enclosed by the display 110 and the housing.

The mobile phone may further include a camera apparatus 200 and a flash (not shown in the figure), to implement an image shooting function. At least a part of the camera apparatus 200 may be located in the accommodation space enclosed by the display 110 and the housing. The camera apparatus 200 may include a front-facing camera apparatus and a rear-facing camera apparatus. The rear-facing camera apparatus and the flash may be disposed on a side that is of the middle plate 132 and that faces the rear cover 120, and a mounting hole 121 that can be used for mounting the rear-facing camera apparatus is provided in the rear cover 120. The front-facing camera apparatus may be disposed on a side that is of the middle plate 132 and that faces the display 110. In embodiments of this application, disposing positions of the front-facing camera apparatus and the rear-facing camera apparatus include but are not limited to the foregoing descriptions. In some embodiments, one or N front-facing cameras apparatus and one or N rear-facing cameras apparatus may be disposed in the mobile phone. Herein, N is a positive integer greater than 1.

It may be understood that the structure shown in this embodiment of this application does not constitute a specific limitation on the electronic device 100. In some other embodiments of this application, the electronic device 100 may include more or fewer components than those shown in the figure, some components may be combined, some components may be split, or different component arrangements may be used. The components shown in the figure may be implemented by hardware, software, or a combination of software and hardware.

Based on the foregoing descriptions, in embodiments of this application, a scenario in which the rear-facing camera apparatus is disposed in the mobile phone is used as an example for description. In some other examples, the rear-facing camera apparatus may alternatively be used as the front-facing camera apparatus.

As shown in FIG. 2 and FIG. 3, the rear cover 120, the side frame 131, and the display 110 enclose to form accommodation space, and at least a part of the camera apparatus 200 is located in the accommodation space, to reduce a size of the camera apparatus 200 protruding from the outside of the mobile phone, and reduce impact of the camera apparatus 200 on an appearance of the mobile phone. For example, the camera apparatus 200 may be partially located in the accommodation space, or the camera apparatus 200 may be completely located in the accommodation space.

A mounting hole 121 is provided in the rear cover 120, and the mounting hole 121 may be located at an edge position of the rear cover 120, or a middle position of the rear cover 120. In some other examples, the mounting hole 121 may alternatively be located on any side of the side frame 131, or at a corner of the side frame 131.

The following describes in detail the camera apparatus 200 provided in embodiments of this application.

Refer to FIG. 4. The camera apparatus 200 may include a lifting apparatus and a camera module 220, where the camera module 220 is mounted on the lifting apparatus. The lifting apparatus may include a carrier member 210, a drive assembly, a rotating member 230, and a lifting member 240. The carrier member 210 may be configured to bear another mechanical part, and protect the another mechanical part, contributing to overall mechanical strength of the camera apparatus 200.

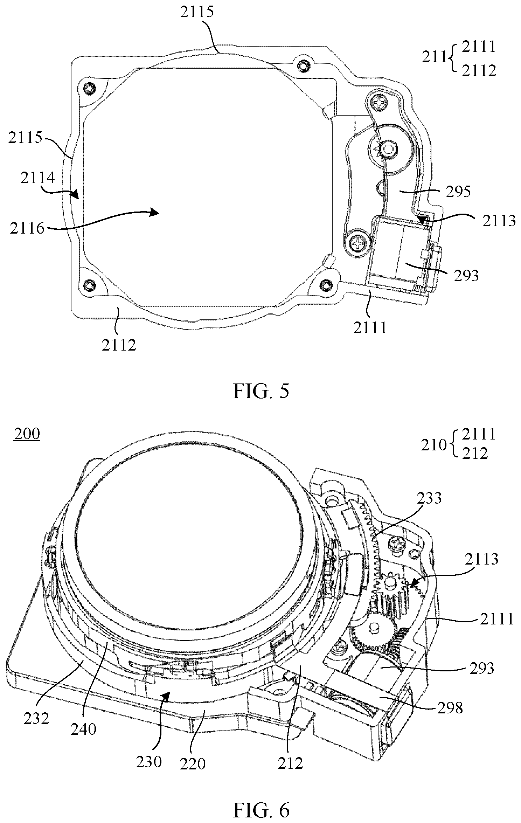

Refer to FIG. 5 and FIG. 6. The carrier member 210 may include a carrier base 211, a drive assembly (the drive assembly may be a first drive assembly) is mounted on the carrier base 211, and the rotating member 230 is rotatably disposed on the carrier base 211. The first drive assembly fits with the rotating member 230, and the rotating member 230 is configured to drive the lifting member 240 to lift or lower in a rotation process. The first drive assembly is configured to: drive the rotating member 230 to rotate, and drive, by using the rotating member 230, the lifting member 240 to lift or lower. After the lifting member 240 lifts, a size between the lifting member 240 and the rotating member 230 increases in a thickness direction of the lifting apparatus, and a size of the lifting apparatus increases in a thickness direction of the camera apparatus 200, so that a size of the camera apparatus 200 increases in the thickness direction, and a total track length (Total Track Length, TTL for short) of the camera apparatus 200 increases. This improves imaging quality of the camera apparatus 200 and the electronic device 100.

For example, refer to FIG. 5 and FIG. 6. A drive accommodating groove 2113 may be provided on a side that is of the carrier base 211 and that faces the lifting member 240, and the drive accommodating groove 2113 is used to place the first drive assembly, to limit and protect the first drive assembly. A slide rail 2114 may be further disposed on the side that is of the carrier base 211 and that faces the lifting member 240, and at least a part of the rotating member 230 is located in the slide rail 2114 and rotates along the slide rail 2114 under driving of the first drive assembly. An inner wall surface of the slide rail 2114 may include a first inner wall surface and a second inner wall surface that are oppositely disposed in a radial direction of the rotating member 230 and are spaced apart. The rotating member 230 is located between the first inner wall surface and the second inner wall surface. At least a part of the first inner wall surface and at least a part of the second inner wall surface are first arc surfaces 2115, and form the arc-shaped slide rail 2114. At least a part of an outer wall surface of the rotating member 230 is a second arc surface 232. The first arc surface 2115 and the second arc surface 232 cooperate with each other, so that the rotating member 230 performs rotational movement along the inner wall surface of the slide rail 2114 under an action of the first drive assembly. The slide rail 2114 may include at least one of the first inner wall surface and the second inner wall surface.

Refer to FIG. 5. The carrier base 211 may include a first carrier part 2111 and a second carrier part 2112 that are connected to each other. The drive accommodating groove 2113 is provided on the first carrier part 2111, and the slide rail 2114 is disposed on the second carrier part 2112. FIG. 6 shows only the first carrier part 2111, and does not show the second carrier part 2112.

For example, the rotating member 230 and the lifting member 240 may be roughly cylindrical, and accommodating areas are provided on inner sides of the rotating member 230 and the lifting member 240. The camera module 220 is at least partially located in the accommodating area, and lifts or lowers in the accommodating area, to reduce a size occupied by the camera module 220 and protect the camera module 220. When the camera module 220 is in a retracted state, the rotating member 230 and the lifting member 240 may be at least partially sleeved with each other, so that an overall thickness of the rotating member 230 and the lifting member 240 is small. At least a part of the lifting member 240 may be sleeved on an outer side of at least a part of the rotating member 230; or at least a part of the rotating member 230 may be sleeved on an outer side of at least a part of the lifting member 240. Alternatively, in the thickness direction of the camera apparatus 200, the rotating member 230 and the lifting member 240 may be spaced apart, to avoid mutual interference between the rotating member 230 and the lifting member 240 in an assembly process.

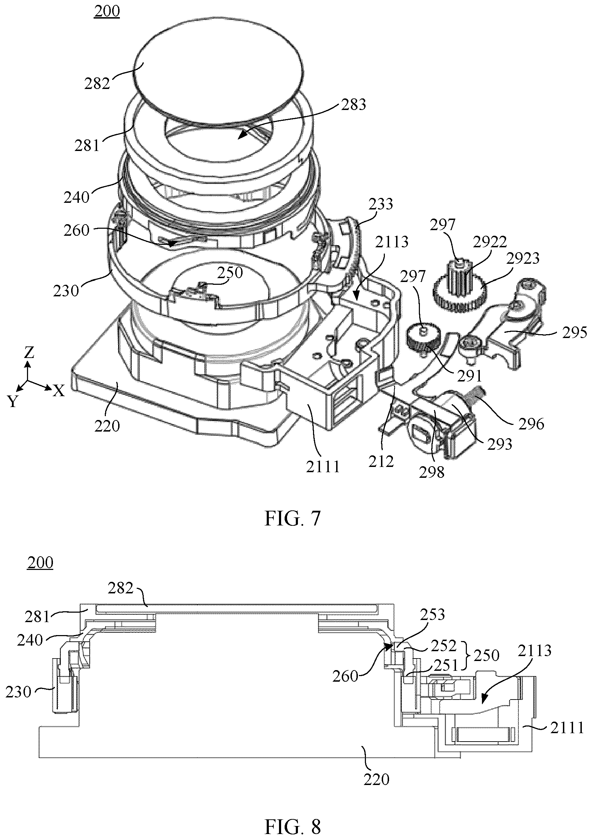

As shown in FIG. 2 and FIG. 7, the mobile phone may include a first direction X, a second direction Y, and a third direction Z. The first direction X, the second direction Y, and the third direction Z are different. The first direction X, the second direction Y, and the third direction Z may be perpendicular to each other. For example, the first direction X may be a width direction of the mobile phone, the second direction Y may be a length direction of the mobile phone, and the third direction Z may be a thickness direction of the mobile phone. A length, a width, a thickness, and the like in embodiments of this application are merely for ease of description, and do not mean any limitation on a size. For example, the width may be greater than, equal to, or less than the length. A direction of the mobile phone may be consistent with directions of the camera apparatus 200, the first drive assembly, the camera module 220, and the like.

A lifting direction or a lowering direction of the camera module 220 and the lifting member 240 may include but is not limited to the first direction X (an X direction), the second direction Y (a Y direction), or the third direction Z (a Z direction). In this embodiment of this application, an example in which the Z direction is the lifting direction or the lowering direction of the camera module and the lifting member 240 is used for description.

The following describes a lifting or lowering manner of the camera module 220 in embodiments of this application.

In some examples, the camera module 220 may include a camera and a second drive assembly. The second drive assembly is connected to the camera, and the second drive assembly may be configured to drive the camera to lift or lower. In addition, the second drive assembly may be further configured to adjust a focal length. When the first drive assembly drives the rotating member 230 to rotate in a first rotation direction, and the rotating member 230 drives the lifting member 240 to lift, a distance between the lifting member 240 and the carrier base 211 in the third direction Z (FIG. 7) increases, so that the accommodating areas in the rotating member 230 and the lifting member 240 increase. The camera lifts under an action of the second drive assembly, to increase the total track length of the lens of the camera apparatus 200. This improves imaging quality of the camera apparatus 200 and the electronic device 100. When the first drive assembly drives the rotating member 230 to rotate in a second rotation direction, and the rotating member 230 drives the lifting member 240 to lower, the distance between the lifting member 240 and the carrier base 211 in the third direction Z (FIG. 7) decreases, so that the accommodating areas in the rotating member 230 and the lifting member 240 decrease. The camera lowers under the action of the second drive assembly, reducing a size of the camera apparatus 200. This process is repeated to lift or lower the camera. Because lifting or lowering of the camera is controlled by the second drive assembly, the lifting member 240 does not control lifting or lowering of the camera, the lifting member 240 is decoupled from the camera. In this case, impact of the lifting member 240 on lifting or lowering precision of the camera can be avoided, and there is a small quantity of mechanical parts that affect the lifting or lowering precision of the camera. This improves controllability of the lifting or lowering precision of the camera, to ensure image shooting performance of the camera apparatus 200.

In some other examples, the camera module 220 is mounted on the lifting member 240, and the lifting member 240 drives the camera module 220 to lift or lower. When the first drive assembly drives the rotating member 230 to rotate in the first rotation direction, and the rotating member 230 drives the lifting member 240 to lift, the lifting member 240 drives the camera module 220 to lift, and the distance between the lifting member 240 and the carrier base 211 and a distance between the camera module 220 and the carrier base 211 in the third direction Z (FIG. 7) increase. When the first drive assembly drives the rotating member 230 to rotate in the second rotation direction, and the rotating member 230 drives the lifting member 240 to lower, the lifting member 240 drives the camera module 220 to lower, and the distance between the lifting member 240 and the carrier base 211 and the distance between the camera module 220 and the carrier base 211 in the third direction Z (FIG. 7) decrease. This process is repeated to lift or lower the camera. In this case, because the lifting member 240 and the camera module 220 synchronously lift or lower, lifting or lowering consistency between the camera module 220 and the lifting member 240 is good, and another mechanical part does not need to be disposed to determine the lifting or lowering consistency between the camera module 220 and the lifting member 240, so that a structure of the camera module 220 is simple. The camera module 220 may include a focus motor and the camera that are connected to each other, and the focus motor is configured to adjust the focal length.

In this embodiment of this application, an example in which the second drive assembly drives the camera to lift or lower is used for description.

The camera may include a lens. The lens may include a lens barrel and a plurality of lenses located in the lens barrel. The lens may be a plastic (Plastic) lens and a glass (Glass) lens.

The lens may include a 5P lens (five lenses), a 6P lens (six lenses), or the like based on a quantity of lenses. For example, the 5P lens may be five plastic lenses, or four plastic lenses and one glass lens; and the 6P lens may be six plastic lenses, or five plastic lenses and one glass lens. The quantity of lenses in the lens is not limited to 5 or 6, and may be any quantity greater than or equal to 2.

At least a part of the camera module 220 may be located on the side that is of the carrier base 211 and that faces the lifting member 240, so that the first drive assembly and the camera module 220 have an overlapping part in the thickness direction, to reduce an overall thickness of the camera apparatus 200.

As shown in FIG. 5, the carrier base 211 is provided with a hollow area 2116, the camera module 220 passes through the hollow area 2116, and a part of the camera module 220 is located on the side that is of the carrier base 211 and that faces the lifting member 240. The slide rail 2114 may be located on a periphery of the hollow area 2116. The part of the camera module 220 located on the side that is of the carrier base 211 and that faces the lifting member 240 passes through the rotating member 230 and is located in the accommodating area. The part of the camera module 220 may include the camera, the second drive assembly, and the like. The other part of the camera module 220 is located on a side that is of the carrier base 211 and that is away from the lifting member 240. The camera module 220 located on the side that is of the carrier base 211 and that is away from the lifting member 240 may include an optical image stabilization structure. The optical image stabilization structure occupies a large size on an XY plane. The optical image stabilization structure is disposed on the side that is of the carrier base 211 and that is away from the lifting member 240, to avoid impact of the optical image stabilization structure on sizes of the rotating member 230 and the lifting member 240. This facilitates miniaturization of the camera apparatus 200.

The following describes a status of the camera apparatus 200 provided in embodiments of this application.

As shown in FIG. 6, the camera apparatus 200 may include a retracted state, where the retracted state means that the camera and the lifting member 240 do not extend out of the camera apparatus 200. In this case, a thickness of the camera apparatus 200 is smaller, an overall thickness of the electronic device 100 is smaller, and the camera apparatus 200 has smaller impact on an appearance of the electronic device 100.

The camera apparatus 200 may include an extended state, where the extended state means that the camera and the lifting member 240 move toward a direction away from the carrier base 211. For example, the camera and the lifting member 240 extend out along the rear cover 120 in a direction away from the display 110. In this case, the thickness of the camera apparatus 200 increases, available optical space of the camera apparatus 200 is larger, and the total track length of the lens increases, so that good image shooting quality can be obtained, improving imaging quality of the camera apparatus 200 and the electronic device 100. The thickness of the camera apparatus 200 is no longer limited by a thickness of the electronic device 100, and the thickness of the electronic device 100 may be set smaller, facilitating lightness and thinness of the electronic device 100.

Certainly, the camera apparatus 200 may alternatively be in an intermediate state between the extended state and the retracted state. When the camera apparatus 200 is in the extended, retracted, or intermediate state, the lifting member 240 and the camera may also be in a same state.

The following describes a protective cover provided in embodiments of this application.

As shown in FIG. 7, the lifting apparatus may include the protective cover, and the protective cover may include a top protective cover 281. The top protective cover 281 is connected to a side that is of the lifting member 240 and that is away from the carrier base 211. The top protective cover 281 is a lifting mechanical part, and the top protective cover 281 lifts or lowers with the lifting member 240. When an external force acts on the camera apparatus 200, the external force first acts on the top protective cover 281. The top protective cover 281 may protect the camera apparatus 200. In the thickness direction of the camera apparatus 200, there is a spacing between the top protective cover 281 and the camera module 220. When the external force acts on the top protective cover 281, there is buffer space between the top protective cover 281 and the camera module 220. The top protective cover 281 needs to move toward the carrier base 211 by a specific distance to contact the camera module 220, so that the external force may not directly act on the camera module 220 by using the top protective cover 281, protecting the camera module 220.

A light-transmitting hole 283 may be provided in a middle area of the top protective cover 281. The light-transmitting hole 283 is covered with a light-transmitting member 282. The lens and the light-transmitting member 282 are oppositely disposed in the Z direction. In this case, during image shooting, external light may enter the lens through the light-transmitting member 282. The light-transmitting member 282 may be connected to the top protective cover 281 through interlocking, bonding, or the like.

In the thickness direction of the camera apparatus 200, there is always the spacing between the camera module 220 and the top protective cover 281. Presence of the spacing may prevent the external force from directly acting on the camera module 220 by using the top protective cover 281, protecting the camera module 220.

In some embodiments, the protective cover may further include a first cover body. The first cover body may extend along a plane (the XY plane) on which the carrier base 211 is located. The first cover body is located on the side that is of the carrier base 211 and that faces the lifting member 240, and may be connected to the carrier base 211. The first cover body may be annularly disposed on a periphery of the lifting member 240. The first cover body may cover a groove opening of the drive accommodating groove 2113, to form a sealed environment between the first carrier part 2111 and the first cover body. The first cover body may alternatively cover a side that is of the slide rail 2114 and that faces the lifting member 240, to form a sealed environment between the second carrier part 2112 and the first cover body. The first cover body is a static mechanical part, and does not perform lifting or lowering movement.

In some embodiments, the protective cover may further include a second cover body, and the second cover body extends in the thickness direction (the Z direction) of the camera apparatus 200. A second extending part is sleeved on an outer side of the lifting member 240. A shape of the second cover body may be roughly cylindrical. The second cover body protects a mechanical part located on an inner side of the second cover body. The second cover body may be directly connected to the carrier base 211, or indirectly connected to the carrier base 211 through another mechanical part. For example, the second cover body may be connected to the carrier base 211 through the first cover body. One end that is of the second cover body and that faces the carrier base 211 may be connected to an inner edge of the first cover body.

For example, a limiting assembly may be disposed between the lifting member 240 and the second cover body, and the limiting assembly is configured to prevent the lifting member 240 from rotating under driving of the rotating member 230. If the lifting member 240 also rotates when the rotating member 230 rotates, rotational movement of the rotating member 230 cannot be converted into lifting or lowering movement of the lifting member 240. Therefore, the limiting assembly needs to be disposed, to limit rotation of the lifting member 240 on the XY plane. The limiting assembly may include a limiting protrusion part and a limiting recess part. One of the limiting protrusion part and the limiting recess part is located on an outer wall surface of the lifting member 240, and the other of the limiting protrusion part and the limiting recess part is located on an inner wall surface of the second cover body. The limiting protrusion part is located in the limiting recess part, and the limiting protrusion part moves in the limiting recess part in the Z direction. The limiting protrusion part and the limiting recess part are disposed, to limit rotation of the lifting member 240 on the XY plane, and guide the lifting direction or the lowering direction of the lifting member 240.

Refer to FIG. 8. The camera apparatus 200 may include a guide member 250, and the guide member 250 includes a first end 251 and a second end 252 that are oppositely disposed in the thickness direction of the camera apparatus 200. A guide passage 260 is disposed on one of the rotating member 230 and the lifting member 240. The guide passage 260 is tilted relative to the lifting direction or the lowering direction of the lifting member 240. The other of the rotating member 230 and the lifting member 240 is connected to the first end 251 of the guide member 250. A protrusion 253 fitting in the guide passage 260 is disposed on the second end 252 of the guide member 250. The protrusion 253 is inserted into the guide passage 260, and moves in an extension direction of the guide passage 260.

The following describes the guide passage 260 and the guide member 250 provided in embodiments of this application.

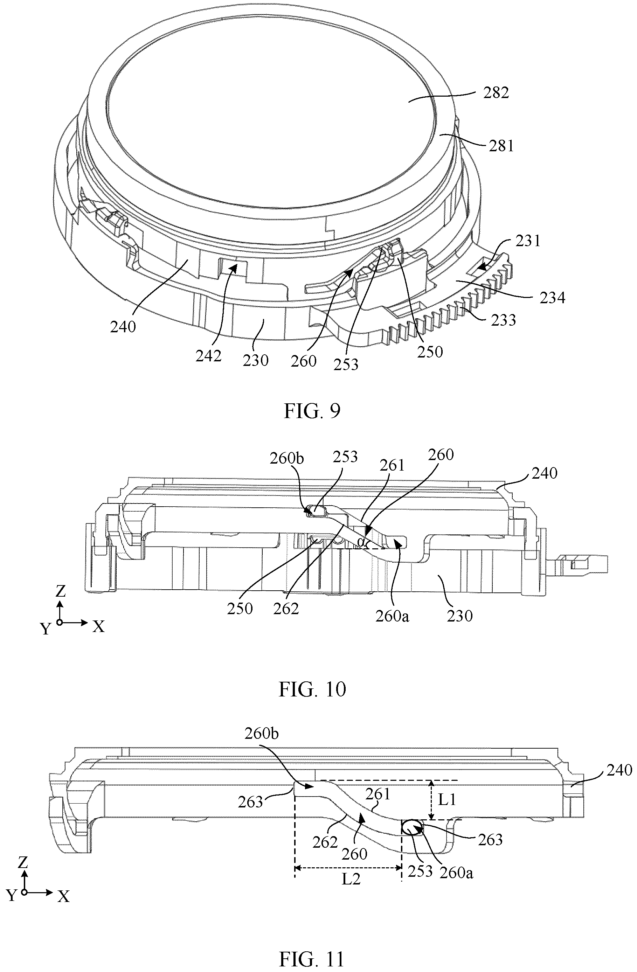

In a first implementation, refer to FIG. 8 and FIG. 9. The guide passage 260 may be disposed on the lifting member 240. The first end 251 of the guide member 250 is connected to the rotating member 230. The protrusion 253 of the second end 252 of the guide member 250 is inserted into the guide passage 260 of the lifting member 240, and moves in the extension direction of the guide passage 260. The first drive assembly drives the rotating member 230 to rotate, the rotating member 230 drives the guide member 250 to rotate, and the guide member 250 moves along the guide passage 260 in a rotation process. Because the guide passage 260 is tilted, one end that is of the guide passage 260 and that faces the carrier base 211 is closer to the carrier base 211, and one end that is of the guide passage 260 and that is away from the carrier base 211 is farther away from the carrier base 211. When the protrusion 253 is located at the one end that is of the guide passage 260 and that faces the carrier base 211, the lifting member 240 is in an extended state. When the protrusion 253 is located at the one end that is of the guide passage 260 and that is away from the carrier base 211, the lifting member 240 is in a retracted state.

In a second implementation, the guide passage 260 may be disposed on the rotating member 230. The first end 251 of the guide member 250 is connected to the lifting member 240. The protrusion 253 of the second end 252 of the guide member 250 is inserted into the guide passage 260 of the rotating member 230, and moves in the extension direction of the guide passage 260. The first drive assembly drives the rotating member 230 to rotate, the rotating member 230 drives the guide passage 260 to rotate, and the guide passage 260 moves relative to the guide member 250 in a rotation process. Because the guide passage 260 is tilted, the one end that is of the guide passage 260 and that faces the carrier base 211 is closer to the carrier base 211, and the one end that is of the guide passage 260 and that is away from the carrier base 211 is farther away from the carrier base 211. When the protrusion 253 is located at the one end that is of the guide passage 260 and that faces the carrier base 211, the lifting member 240 is in a retracted state. When the protrusion 253 is located at the one end that is of the guide passage 260 and that is away from the carrier base 211, the lifting member 240 is in an extended state.

In this embodiment of this application, an example in which the guide passage 260 is disposed on the lifting member 240, and the first end 251 of the guide member 250 is connected to the rotating member 230 is used for description.

The guide passage 260 may pass through the outer wall surface and an inner wall surface of the lifting member 240 in a radial direction of the lifting member 240, and the guide passage 260 may be further formed by a groove disposed on the outer wall surface or the inner wall surface of the lifting member 240. The second end 252 may be located on an inner side of the lifting member 240, and the protrusion 253 is inserted into the guide passage 260 from the inner side of the lifting member 240. Alternatively, as shown in FIG. 10, the second end 252 may be located on an outer side of the lifting member 240, and the protrusion 253 is inserted into the guide passage 260 from the outer side of the lifting member 240.

The guide member 250 may be fastened to the rotating member 230, so that connection stability between the guide member 250 and the rotating member 230 is high. For example, the guide member 250 may be fastened to the rotating member 230 through bonding, welding, integral forming, or the like. **In** some other examples, the guide member 250 may be detachably connected to the rotating member 230, to facilitate mounting and removal of the guide member 250. This is similar to a principle of disposing the guide passage 260 on the rotating member 230, and details are not described herein again.

The following describes the guide passage 260 provided in embodiments of this application.

As shown in FIG. 10, a first passage 260a is disposed at the one end that is of the guide passage 260 and that faces the carrier base 211, and a second passage 260b is disposed at the one end that is of the guide passage 260 and that is away from the carrier base 211. Both the first passage 260a and the second passage 260b may extend along the XY plane, and inner wall surfaces of the first passage 260a and the second passage 260b may be parallel to the XY plane, so that a contact size between the protrusion 253 and an inner wall surface of the first passage 260a or the second passage 260b is large. When the protrusion 253 is located in the first passage 260a or the second passage 260b, effect of mutual support between the protrusion 253 and the inner wall surface of the first passage 260a or the second passage 260b is good, and the protrusion 253 may be stably located in the first passage 260a or the second passage 260b, to avoid sliding of the protrusion 253 caused by being located in a tilted guide passage 260 when the lifting member 240 is in an extended state or in a retracted state. In this way, the lifting member 240 can be stably in an extended state or a retracted state, to prevent the camera apparatus 200 from shaking, and ensure image shooting effect of the camera apparatus 200.

When the protrusion 253 moves in the guide passage 260, the lifting member 240 switches between an extended state and a retracted state. Refer to FIG. 10. In an implementation in which the guide passage 260 is located on the lifting member 240, when the protrusion 253 is located on the first passage 260a, the lifting member 240 is in an extended state; or when the protrusion 253 is located on the second passage 260b, the lifting member 240 is in a retracted state. In an implementation in which the guide passage 260 is located on the rotating member 230, when the protrusion 253 is located on the first passage 260a, the lifting member 240 is in a retracted state; or when the protrusion 253 is located on the second passage 260b, the lifting member 240 is in an extended state.

For example, an end face of the protrusion 253 in an axial direction of the rotating member 230 is a planar structure, and two ends of the planar structure are curved surfaces. In this way, the protrusion 253 can smoothly fit in the guide passage 260. This avoids wear and scratching of the protrusion 253 against the guide passage 260, avoids sticking in a lifting or lowering process, and prolongs service lives of the protrusion 253 and the guide passage 260. Certainly, the protrusion 253 may alternatively be in a structure of another shape. For example, the end face of the protrusion 253 in the axial direction of the rotating member 230 is an arc surface structure. This is not limited in embodiments of this application.

Refer to FIG. 11. A spacing between the first passage 260a and the second passage 260b in an axial direction of the lifting member 240 is a first spacing L1. The first spacing L1 is a maximum distance by which the lifting member 240 can lift or lower in the Z direction. A spacing between the first passage 260a and the second passage 260b in a circumferential direction of the lifting member 240 is a second spacing L2. When the rotating member 230 drives the protrusion 253 to move in the guide passage 260 in the circumferential direction of the lifting member 240 by a distance equal to the second spacing L2, the lifting member 240 may lift or lower in a Z direction by the first spacing L1. In addition, a gear structure 233 (shown in FIG. 11) is disposed on an outer side of the rotating member 230, and the gear structure 233 is disposed at one end that is of the rotating member 230 and that is close to the carrier base 211, to mesh with the first drive assembly. A length of the gear structure 233 that covers the rotating member 230 in the circumferential direction of the rotating member 230 is greater than or equal to the second spacing L2.

A stop wall 263 is disposed on each of one end that is of the first passage 260a and that is away from the second passage 260b and one end that is of the second passage 260b and that is away from the first passage 260a. The stop wall 263 is configured to limit the protrusion 253 in the guide passage 260.

For example, the protrusion 253 may include an upper end face and a lower end face that are spaced apart in the axial direction of the lifting member 240. The lower end face is located on a side that is of the protrusion 253 and that faces the carrier base 211, and the upper end face is located on a side that is of the protrusion 253 and that is away from the carrier base 211.

In some embodiments, refer to FIG. 10. The guide passage 260 may include a first drive surface 261, and the first drive surface 261 is located on a side that is of the protrusion 253 and that is away from the first end 251.

In an implementation in which the guide passage 260 is located on the lifting member 240, the first drive surface 261 and the upper end face of the protrusion 253 are oppositely disposed. When the guide member 250 drives the protrusion 253 to move from the second passage 260b to the first passage 260a, the upper end face of the protrusion 253 abuts against the first drive surface 261, and drives the lifting member 240 to lift. In addition, when the protrusion 253 is static, the upper end face of the protrusion 253 supports the first drive surface 261, to support the lifting member 240.

In an implementation in which the guide passage 260 is located on the rotating member 230, the first drive surface 261 and the lower end face of the protrusion 253 are oppositely disposed. When the rotating member 230 drives the guide passage 260 to move in a direction from the second passage 260b to the first passage 260a, the first drive surface 261 abuts against the lower end face of the protrusion 253, and pushes the guide member 250 to lift, and then the guide member 250 drives the lifting member 240 to lift. In addition, when the protrusion 253 is static, the first drive surface 261 supports the lower end face of the protrusion 253, to support the guide member 250 and the lifting member 240.

In some examples, refer to FIG. 10. The first drive surface 261 may be a plane, so that the first drive surface 261 has a simple structure and low manufacturing difficulty. In some other examples, refer to FIG. 11. The first drive surface 261 may be a curved surface, and the curved surface is bent toward the lowering direction (equivalent to a retracting direction) of the lifting member 240. When the first drive surface 261 is a curved surface, an extension length of a curved surface is longer than an extension length of a plane. When the lifting member 240 moves in the third direction Z by a same distance, a movement distance of the protrusion 253 on a curved surface is longer than a movement distance of the protrusion 253 on a plane, so that lifting or lowering precision of the lifting member 240 can be improved.

In some embodiments, still refer to FIG. 10 and FIG. 11. The guide passage 260 may include a second drive surface 262 that is spaced apart from the first drive surface 261, and the second drive surface 262 is located on a side that is of the protrusion 253 and that faces the first end 251.

In an implementation in which the guide passage 260 is located on the lifting member 240, the second drive surface 262 and the lower end face of the protrusion 253 are oppositely disposed. When the guide member 250 drives the protrusion 253 to move from the first passage 260a to the second passage 260b, the lower end face of the protrusion 253 abuts against the second drive surface 262, and drives the lifting member 240 to lower.

In an implementation in which the guide passage 260 is located on the rotating member 230, the second drive surface 262 and the upper end face of the protrusion 253 are oppositely disposed. When the rotating member 230 drives the guide passage 260 to move in a direction from the first passage 260a to the second passage 260b, the second drive surface 262 abuts against the upper end face of the protrusion 253, and pushes the guide member 250 to lower, and then the guide member 250 drives the lifting member 240 to lower.

In some examples, the second drive surface 262 may be a plane, so that the second drive surface 262 has a simple structure and low manufacturing difficulty. When the second drive surface 262 is a curved surface, the curved surface is bent toward the lowering direction (equivalent to a retracting direction) of the lifting member 240. An extension length of a curved surface is longer than an extension length of a plane. When the lifting member 240 moves in the third direction Z by a same distance, a movement distance of the protrusion 253 on a curved surface is longer than a movement distance of the protrusion 253 on a plane, so that lifting or lowering precision of the lifting member 240 can be improved.

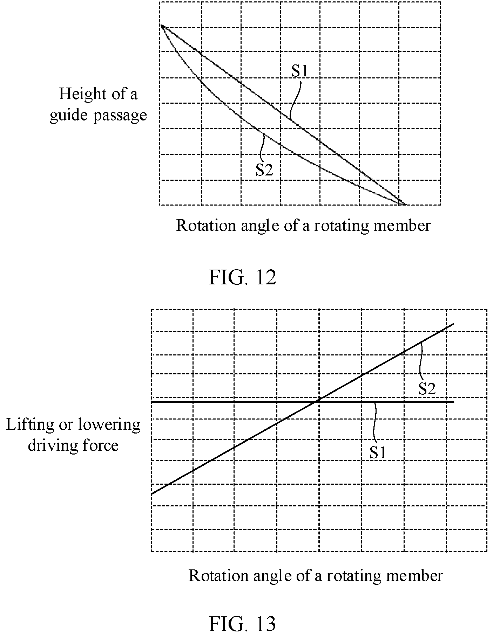

The following uses an example in which the guide passage 260 is located on the lifting member 240. When the guide member 250 drives the protrusion 253 to move from the first passage 260a to the second passage 260b, a horizontal driving force applied by the protrusion 253 to the second drive surface 262 is located on the plane in which X and Y are located. The horizontal driving force is converted, by using the second drive surface 262, into a lifting driving force in the third direction Z, and the lifting driving force is used to drive the lifting member 240 to lower. The horizontal driving force may be a fixed value. A smaller included angle (an included angle α in FIG. 10) between the second drive surface 262 and the XY plane indicates a larger lifting driving force obtained by converting the horizontal driving force by using the second drive surface 262. Refer to FIG. 12. S1 shows a shape of a cross section shown when the second drive surface 262 is a plane, and S2 shows a shape of a cross section shown when the second drive surface 262 is a curved surface. Refer to FIG. 13. S1 shows a change in the lifting driving force with the rotation angle of the rotating member 230 occurred when the second drive surface 262 is a plane. S2 shows the change in the lifting driving force with the rotation angle of the rotating member 230 occurred when the second drive surface 262 is a curved surface. The rotation angle of the rotating member 230 may correspond to a height of the guide passage 260. When the rotation angle of the rotating member 230 increases, the height of the guide passage 260 corresponding to the protrusion 253 decreases, and the lifting member 240 lowers. When the second drive surface 262 is a plane, the included angle between the second drive surface 262 and the XY plane is a fixed value, and lifting driving forces obtained by converting the horizontal driving force by using the second drive surface 262 are all equal. When the second drive surface 262 is a curved surface, the curved surface is bent toward the lowering direction (equivalent to the retracting direction) of the lifting member 240, so that the angle between the second drive surface 262 and the XY plane gradually decreases in the lowering direction, and the lifting driving force obtained by converting the horizontal driving force by using the second drive surface 262 gradually increases in the lowering direction. This can meet some application scenarios in which the lifting driving force needs to gradually increase in the lowering direction. For example, a second elastic member may be disposed between the lifting member 240 and the carrier base 211, the second elastic member may be in a compressed state, and the second elastic member provides a pushing force for the lifting member 240, so that the lifting member 240 can extend more easily. In a retracting process of the lifting member 240, a compression degree of the second elastic member gradually increases. As a result, the lifting driving force for retracting the lifting member 240 needs to gradually increase. Therefore, when the second drive surface 262 is configured as a curved surface, the lifting driving force can be changed, so that an actual lifting driving force matches a magnitude of the lifting driving force required for retracting the lifting member 240.

The guide passage 260 may include both the first drive surface 261 and the second drive surface 262. The lifting member 240 may lift under an interaction between the first drive surface 261 and the protrusion 253. The lifting member 240 may lower under an interaction between the second drive surface 262 and the protrusion 253. Therefore, the lifting member 240 may lift or lower under the interaction between the protrusion 253 and the first drive surface 261 and the interaction between the protrusion 253 and the second drive surface 262.

In addition, only the first drive surface 261 may be disposed on the guide passage 260, and the second drive surface 262 is not disposed, so that a structure of the guide passage 260 is simple. The lifting member 240 may lift under the interaction between the first drive surface 261 and the protrusion 253. However, because the second drive surface 262 is not disposed, the lifting member 240 cannot lower by using the second drive surface 262. The camera apparatus 200 may include a first elastic member, and the first elastic member is configured to provide an elastic driving force toward the carrier base 211 for the lifting member 240, to drive the lifting member 240 to lower. For example, the guide passage 260 is located on the lifting member 240. When the protrusion 253 moves from the first passage 260a to the second passage 260b, the upper end face of the protrusion 253 no longer supports the first drive surface 261, that is, the protrusion 253 no longer supports the lifting member 240. Under the elastic driving force of the first elastic member, the lifting member 240 moves toward the carrier base 211, and the lifting member 240 lowers. As the protrusion 253 continuously moves from the first passage 260a to the second passage 260b, the first elastic member continuously drives the lifting member 240 to lower, to retract the lifting member 240.

For example, there may be at least one guide passage 260. When there are a plurality of guide passages 260, there may be a plurality of guide members 250, and the guide members 250 and the guide passages 260 are disposed in a one-to-one correspondence. When there are the plurality of guide members 250, the plurality of guide members 250 are spaced apart in the circumferential direction of the rotating member 230. For example, the plurality of guide members 250 may be evenly distributed in the circumferential direction of the rotating member 230. Distances between a plurality of protrusions 253 and the carrier base 211 may be the same, so that the lifting member 240 can be subject to uniform forces, and can steadily lift or lower. A quantity of guide members 250 may include but is not limited to 2, 3, 4, 5, 6, or more. The guide members 250 may be distributed in an axially symmetric or centrally symmetric manner, so that the guide members 250 are subject to uniform forces. Alternatively, the guide members 250 may be asymmetrically distributed.

The following describes detection of the rotation angle of the rotating member 230 provided in embodiments of this application.

The lifting apparatus may include an angle detection member and a control member. The control member is electrically connected to the angle detection member and the camera module 220. The control member may be a control chip disposed on the main circuit board 140. The control chip may be a microcontroller unit (Microcontroller Unit, MCU for short), a central processing unit (Central Processing Unit, CPU for short), or the like. The angle detection member is configured to detect a rotation angle of any rotating mechanical part relative to any static mechanical part. The control member is configured to obtain the angle detected by the angle detection member, and may determine a change in the rotation angle of the any rotating mechanical part relative to the any static mechanical part.

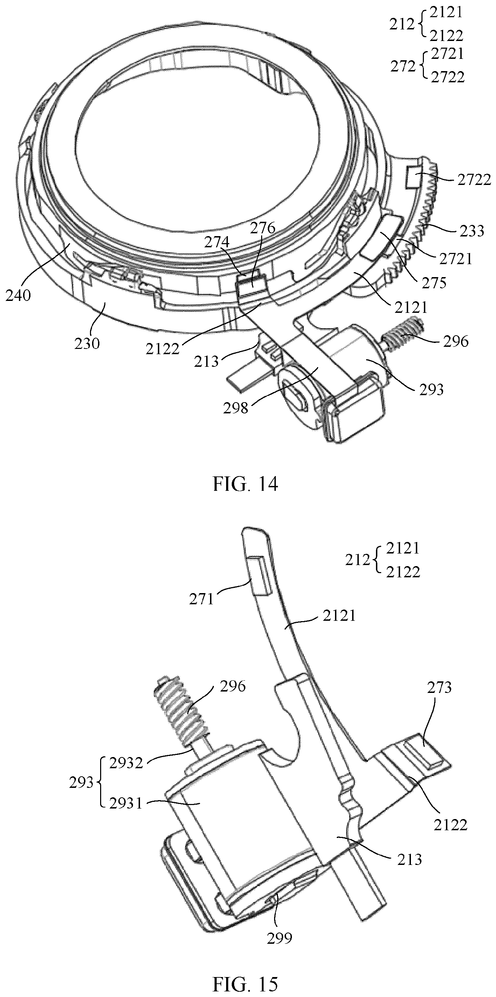

For example, refer to FIG. 14 and FIG. 15. The angle detection member may include a first magnetic induction sensor 271 and a first magnetic member 272. One of the first magnetic induction sensor 271 and the first magnetic member 272 is connected to a static mechanical part, and the other of the first magnetic induction sensor 271 and the first magnetic member 272 is connected to a rotating mechanical part. The angle detection member is not limited in embodiments of this application, provided that the relative rotation angle between the rotating mechanical part and the static mechanical part can be determined. The first magnetic induction sensor 271 is electrically connected to the control member, and the control member is configured to obtain an electrical signal of the first magnetic induction sensor 271.

For example, the static mechanical part is in a static state in the lifting or lowering process of the lifting apparatus, and the static mechanical part may include but is not limited to the carrier member 210, the rear cover 120, the middle frame 130, the first cover body, the second cover body, and the like. The rotating mechanical part is driven by the rotating member 230 to rotate in the lifting or lowering process of the lifting apparatus. The rotating mechanical part may include but is not limited to the rotating member 230 or the guide member 250 (when the guide member 250 is connected to the rotating member 230), and the like.

In this embodiment of this application, an example in which the static mechanical part is the carrier member 210, and the rotating mechanical part is the rotating member 230 is used for description.

When the rotating member 230 rotates in the first rotation direction, a rotation angle of the rotating member 230 relative to the carrier member 210 increases. When the rotating member 230 rotates in the second rotation direction, the rotation angle of the rotating member 230 relative to the carrier member 210 decreases. When the control member determines that the rotation angle between the rotating member 230 and the carrier member 210 increases, the control member controls the second drive assembly to drive the camera to move away from the carrier base 211, to lift the camera. When the control member determines that the rotation angle between the rotating member 230 and the carrier member 210 decreases, the control member controls the second drive assembly to drive the camera to move toward the carrier base 211, to lower the camera. In this case, the camera can lift or lower through cooperation between the angle detection member and the control member. In addition, the angle detection member may further determine whether the rotating member 230 rotates to a required position or is stuck, to determine whether the lifting apparatus lifts or lowers to a required position. If the lifting apparatus does not lift or lower to a required position, the control member may automatically control the rotating member 230 to rotate (or a user may further control the rotating member 230 to rotate), to rotate the rotating member 230 to a required position, and to lift or lower the lifting apparatus and the camera apparatus 200 to required positions. This avoids impact on imaging quality and a service life of the camera apparatus 200. When the angle detection member determines that the lifting apparatus does not lift or lower to a required position, and the control member still cannot control the rotating member 230 to rotate to a required position after attempting to control the rotating member 230 to rotate again, the control member may inform the user that the rotating member 230 is faulty, and the user may clean a foreign object in the lifting apparatus, or send the lifting apparatus to a maintenance service center for maintenance.

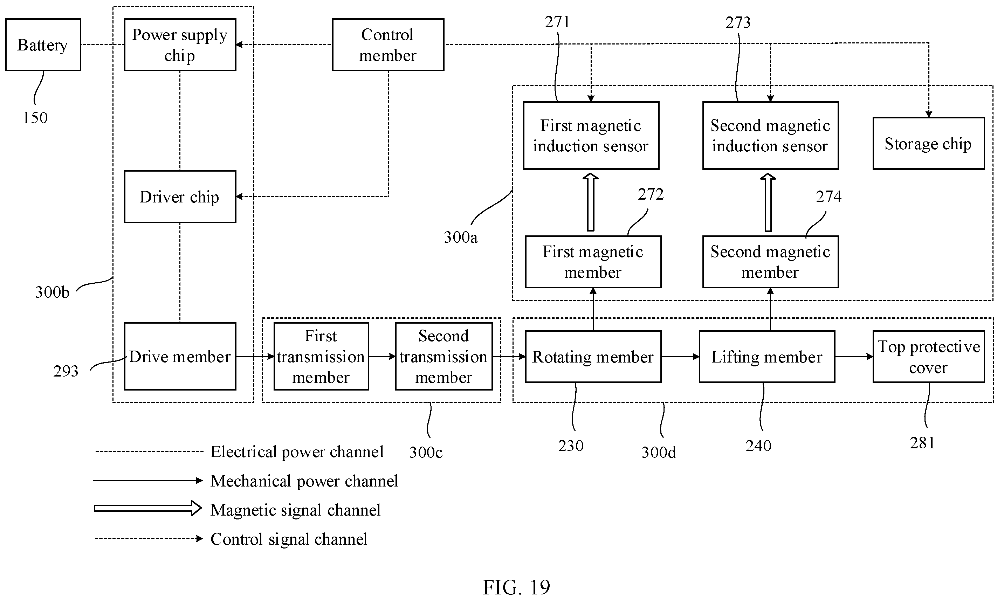

The first magnetic member 272 is configured to generate a first magnetic field, the first magnetic induction sensor 271 is located in the first magnetic field, and the rotating member 230 is configured to drive, in the rotation process, one of the first magnetic induction sensor 271 and the first magnetic member 272 to move toward or away from the other. When the first magnetic induction sensor 271 and the first magnetic member 272 move toward each other, magnetic field strength of the first magnetic member 272 sensed by the first magnetic induction sensor 271 is higher. When the first magnetic induction sensor 271 and the first magnetic member 272 move away from each other, the magnetic field strength of the first magnetic member 272 sensed by the first magnetic induction sensor 271 is lower. The first magnetic induction sensor 271 may convert the sensed magnetic field strength of the first magnetic member 272 into an electrical signal, and obtain a magnitude of the rotation angle by using a correspondence between the electrical signal and the rotation angle. For example, the camera apparatus 200 may include a storage chip, and the storage chip may be electrically connected to the control member. The memory chip may be an electrically erasable programmable read only memory (Electrically Erasable Programmable Read Only Memory, E2PROM for short) chip. The E2PROM chip does not lose data after power-off, supports plug-and-play, and is convenient for use. The storage chip may be configured to store a first correspondence between the electrical signal of the first magnetic induction sensor 271 and the rotation angle of the rotating member 230. Refer to FIG. 19. The storage chip is electrically connected to the control member. The control member may obtain the first correspondence from the storage chip in advance, and perform an operation after obtaining the electrical signal of the first magnetic induction sensor 271, to obtain the rotation angle of the rotating member 230, and determine whether the rotating member 230 rotates to a required position and is stuck.

The first magnetic induction sensor 271 may be a Hall device, a tunnel magneto resistance (Tunnel Magneto Resistance, TMR for short) sensor, or the like. The Hall device is used as an example. The Hall device and the first magnetic member 272 determine the rotation angle between the lifting member 240 and the carrier member 210 by using Hall effect. The Hall effect is magnetoelectric effect. A Hall voltage varies with magnetic field strength. A higher magnetic field strength indicates a higher voltage. A lower magnetic field strength indicates a lower voltage. The Hall device converts a magnetic signal into an electrical signal, and transmits the electrical signal to the control member, to control the rotating member 230 to rotate.

For example, there may be one first magnetic member 272. When the lifting apparatus is in a retracted state or an extended state, the first magnetic member 272 and the first magnetic induction sensor 271 may be oppositely disposed, so that a distance between the first magnetic member 272 and the first magnetic induction sensor 271 is short. For example, when the lifting apparatus is in a retracted state, the first magnetic member 272 and the first magnetic induction sensor 271 are oppositely disposed. When the lifting apparatus is in a retracted state, the magnetic field strength of the first magnetic member 272 sensed by the first magnetic induction sensor 271 is maximum, and a retracted state of the lifting apparatus can be determined accurately. In an extension process of the lifting apparatus, the first magnetic induction sensor 271 and the first magnetic member 272 move away from each other, and the magnetic field strength of the first magnetic member 272 sensed by the first magnetic induction sensor 271 gradually decreases. In a retraction process of the lifting apparatus, the first magnetic induction sensor 271 and the first magnetic member 272 move toward each other, and the magnetic field strength of the first magnetic member 272 sensed by the first magnetic induction sensor 271 gradually increases.

In some embodiments, refer to FIG. 14. There may be two first magnetic members 272, and the two first magnetic members 272 may be spaced apart in the circumferential direction of the rotating member 230. **In** this disposition, in the circumferential direction of the rotating member 230, first magnetic fields of the two first magnetic members 272 cover a large range, and in an entire rotation process of the rotating member 230, the first magnetic induction sensor 271 may be located in the first magnetic fields, so that the rotation angle of the rotating member 230 can be effectively measured. **In** addition, due to a long rotation path of the rotating member 230, if only one first magnetic member 272 is disposed, the first magnetic member 272 needs to be long in the circumferential direction of the rotating member 230 and have a large bending angle. The two first magnetic members 272 that are spaced apart are disposed, a total extension length of the two first magnetic members 272 is small, and both an extension length and a bending angle of a single first magnetic member 272 may be small. This helps reduce costs and manufacturing difficulty of the first magnetic member 272.

**In** some examples, in the circumferential direction of the rotating member 230, south pole-to-north pole directions of the two first magnetic members 272 may be opposite to each other, or in the axial direction of the rotating member 230, south pole-to-north pole directions of the two first magnetic members 272 may be opposite to each other. **In** this disposition, the two first magnetic members 272 have opposite magnetization directions. **In** some other examples, in the circumferential direction of the rotating member 230, south pole-to-north pole directions of the two first magnetic members 272 may be the same. The south pole-to-north pole directions of the two first magnetic members 272 are not limited in embodiments of this application.

**In** this embodiment of this application, an example in which in the circumferential direction or the axial direction of the rotating member 230, the south pole-to-north pole directions of the two first magnetic members 272 are opposite to each other is used for description.

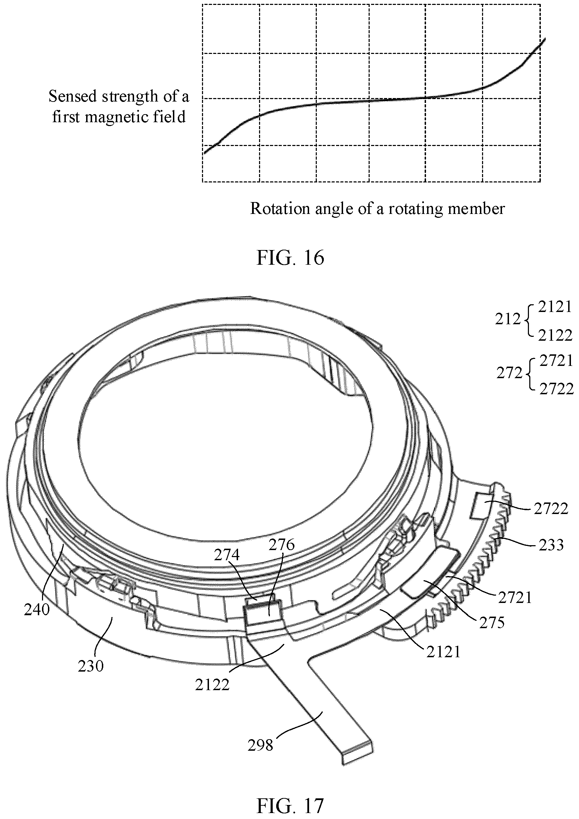

The rotating member 230 is configured to drive, in the rotation process, the first magnetic induction sensor 271 and one of the two first magnetic members 272 to move toward each other, and the first magnetic induction sensor 271 and the other of the two first magnetic members 272 to move away from each other. For example, the two first magnetic members 272 are a first sub-magnetic member 2721 and a second sub-magnetic member 2722. When the lifting apparatus is in a retracted state, the first sub-magnetic member 2721 and the first magnetic induction sensor 271 are oppositely disposed, and a distance between the first sub-magnetic member 2721 and the first magnetic induction sensor 271 is the shortest, so that the sensed magnetic field strength of the first sub-magnetic member 2721 is maximum when the lifting apparatus is in a retracted state, and a retracted state of the lifting apparatus can be accurately determined. When the lifting apparatus is in an extended state, the second sub-magnetic member 2722 and the first magnetic induction sensor 271 are oppositely disposed, and a distance between the second sub-magnetic member 2722 and the first magnetic induction sensor 271 is the shortest, so that sensed magnetic field strength of the second sub-magnetic member 2722 is maximum when the lifting apparatus is in an extended state, and an extended state of the lifting apparatus can be accurately determined. **In** addition, south pole-to-north pole directions of the first sub-magnetic member 2721 and the second sub-magnetic member 2722 are opposite, and the first sub-magnetic member 2721 and the second sub-magnetic member 2722 have opposite magnetization directions, so that a range of magnetic field strength between the first sub-magnetic member 2721 and the second sub-magnetic member 2722 is wide. When the first magnetic induction sensor 271 moves relative to the first sub-magnetic member 2721 and the second sub-magnetic member 2722, a change in magnetic strength sensed by the first magnetic induction sensor 271 is significant. This improves sensitivity of measuring the rotation angle of the rotating member 230. When the rotating member 230 rotates in the first rotation direction (in the extension process of the lifting apparatus), the first magnetic induction sensor 271 moves toward the second sub-magnetic member 2722, and moves away from the first sub-magnetic member 2721. The magnetic field strength of the first sub-magnetic member 2721 sensed by the first magnetic induction sensor 271 decreases, and the magnetic field strength of the second sub-magnetic member 2722 sensed by the first magnetic induction sensor 271 increases. When the rotating member 230 rotates in the second rotation direction (in the retraction process of the lifting apparatus), the first magnetic induction sensor 271 moves toward the first sub-magnetic member 2721, and moves away from the second sub-magnetic member 2722. The magnetic field strength of the first sub-magnetic member 2721 sensed by the first magnetic induction sensor 271 increases, and the magnetic field strength of the second sub-magnetic member 2722 sensed by the first magnetic induction sensor 271 decreases. FIG. 16 shows a change in magnetic field strength of the two first magnetic members 272 sensed by the first magnetic induction sensor 271 when the rotating member 230 rotates.

For example, the first magnetic member 272 may be connected to the carrier member 210, and the first magnetic induction sensor 271 may be connected to the rotating member 230. Alternatively, the first magnetic member 272 may be connected to the rotating member 230, and the first magnetic induction sensor 271 may be connected to the carrier member 210. Because the first magnetic induction sensor 271 is electrically connected to the control member, a structure for an electrical connection needs to be disposed between the first magnetic induction sensor 271 and the control member. When the first magnetic induction sensor 271 is connected to the carrier member 210, the structure for an electrical connection is not pulled and is not prone to damage in the rotation process when the first magnetic induction sensor 271 is connected to the rotating member 230.

In this embodiment of this application, an example in which the first magnetic member 272 is connected to the rotating member 230, and the first magnetic induction sensor 271 is connected to the carrier member 210 is used for description. For example, refer to FIG. 9. An assembly part 234 is disposed on a periphery of the rotating member 230, and a gear structure 233 is disposed on a side that is of the assembly part 234 and that is away from the accommodating area. The assembly part 234 may extend into the drive accommodating groove 2113, so that the gear structure 233 fits with the first drive assembly. A first accommodating groove 231 may be disposed on the assembly part 234, where the first accommodating groove 231 is used to accommodate the first magnetic member 272, and a groove opening of the first accommodating groove 231 may be located on a side face that is of the assembly part 234 and that faces the top protective cover 281, to facilitate mounting of the first magnetic member 272. In some examples, the first magnetic induction sensor 271 may be disposed on the carrier base 211, so that a structure of the carrier member 210 is simple. In some other examples, refer to FIG. 15 and FIG. 17. The carrier member 210 may include a carrier circuit board 212 that is connected to the carrier base 211. The carrier circuit board 212 may include a first carrier circuit board 2121. The first magnetic induction sensor 271 is connected to the first carrier circuit board 2121, and the first magnetic induction sensor 271 may be electrically connected to the control member through the first carrier circuit board 2121. For example, the first magnetic induction sensor 271 may be soldered to the first carrier circuit board 2121 through surface mount soldering. The first carrier circuit board 2121 and the rotating member 230 may be oppositely disposed and spaced apart, to avoid mutual wear between the rotating member 230 and the first carrier circuit board 2121 in the rotation process. The first magnetic induction sensor 271 may be located on a side that is of the first carrier circuit board 2121 and that faces the first magnetic member 272. The first magnetic member 272 may be located on a side that is of the rotating member 230 and that faces the first magnetic induction sensor 271. This can reduce impact of the first carrier circuit board 2121 and the rotating member 230 on magnetic field induction between the first magnetic member 272 and the first magnetic induction sensor 271. The first carrier circuit board 2121 may be a flexible printed circuit (Flexible Printed Circuit, FPC for short), to facilitate a connection between the first carrier circuit board 2121 and the control member. The first carrier circuit board 2121 may be located on a side that is of the first cover body and that faces the drive accommodating groove 2113. The first carrier circuit board 2121 is connected to the first cover body. The first cover body supports the first carrier circuit board 2121, to help keep the first carrier circuit board 2121 static. Alternatively, the first carrier circuit board 2121 may be further connected to a static mechanical part like the rear cover 120 or the middle frame 130, to support the first carrier circuit board 2121, and help keep the first carrier circuit board 2121 static. Certainly, the first carrier circuit board 2121 may be a printed circuit board (Printed Circuit Board, PCB for short).

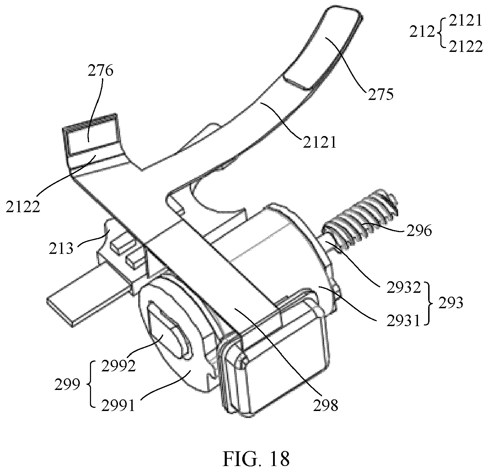

For example, refer to FIG. 17 and FIG. 18. The lifting apparatus may further include a first magnetic isolator 275. The first magnetic isolator 275 is configured to reduce interference from an external magnetic field to the first magnetic induction sensor 271. For example, the first magnetic isolator 275 may be a metal member or another mechanical part that can isolate a magnetic field. In an implementation in which the first magnetic induction sensor 271 is connected to the side that is of the first carrier circuit board 2121 and that faces the first magnetic member 272, the first magnetic isolator 275 may be located on a side that is of the first carrier circuit board 2121 and that is away from the first magnetic member 272, to avoid interference from an external magnetic field on the side that is of the first carrier circuit board 2121 and that is away from the first magnetic member 272 to the first magnetic induction sensor 271. The first carrier circuit board 2121 may be connected to the first cover body, the rear cover 120, or the middle frame 130 through the first magnetic isolator 275. The first magnetic isolator 275 may further improve mechanical strength of the first carrier circuit board 2121. The first magnetic isolator 275 may be connected to the first carrier circuit board 2121 before the first magnetic induction sensor 271, to facilitate subsequent mounting of the first magnetic induction sensor 271. This further improves fastening strength of the first magnetic induction sensor 271, and prevents the first magnetic induction sensor 271 from falling off during a fall, squeeze, or collision of the lifting apparatus. For example, the first magnetic isolator 275 may be connected to the first carrier circuit board 2121 through bonding, soldering, or the like.

The following describes detection of a lifting or lowering distance of the lifting member 240 provided in embodiments of this application.

The camera apparatus 200 may include a distance detection member, and the control member is electrically connected to the distance detection member. The distance detection member is configured to detect a lifting or lowering distance between any static mechanical part and any lifting mechanical part. The control member is configured to obtain the distance detected by the distance detection member, and may determine a change in the distance between the any static mechanical part and the any lifting mechanical part.

For example, refer to FIG. 14 and FIG. 15. The distance detection member may include a second magnetic induction sensor 273 and a second magnetic member 274. One of the second magnetic induction sensor 273 and the second magnetic member 274 is connected to a static mechanical part, and the other of the second magnetic induction sensor 273 and the second magnetic member 274 is connected to a lifting mechanical part. The distance detection member is not limited in embodiments of this application, provided that the distance between the static mechanical part and the lifting mechanical part can be determined. In the lifting or lowering process of the lifting apparatus, the lifting mechanical part is driven by the lifting member 240 to lift or lower. There may be one or two second magnetic members 274. A principle of the second magnetic member 274 is similar to that of the first magnetic member 272, and details are not described again.

For example, the lifting mechanical part may include but is not limited to the lifting member 240, the top protective cover 281, the camera, or the guide member 250 (when the guide member 250 is connected to the lifting member 240).

In this embodiment of this application, an example in which the static mechanical part is the carrier member 210 and the lifting mechanical part is the lifting member 240 is used for description.

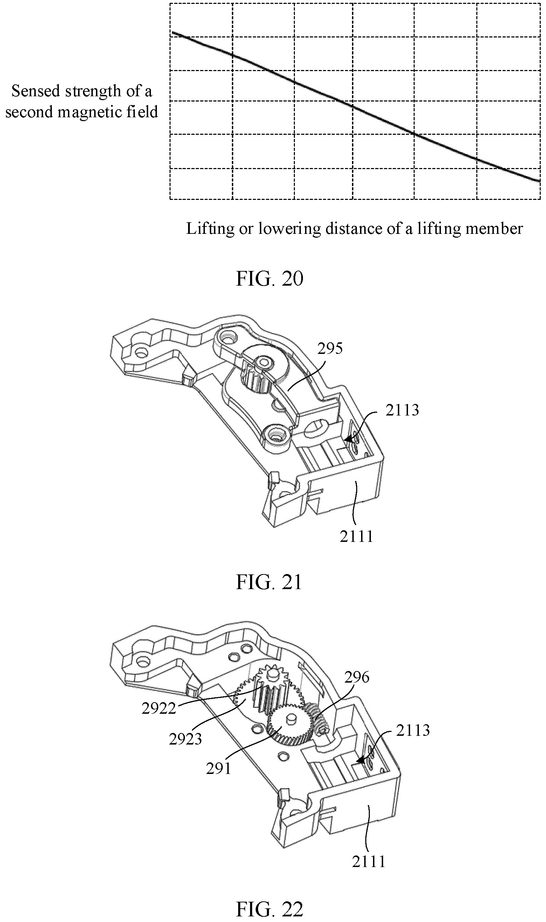

The second magnetic induction sensor 273 is electrically connected to the control member, and the control member is configured to obtain an electrical signal of the second magnetic induction sensor 273. The second magnetic member 274 may be configured to generate a second magnetic field, the second magnetic induction sensor 273 may be located in the second magnetic field, and the lifting member 240 may be configured to drive, in the lifting or lowering process, one of the second magnetic induction sensor 273 and the second magnetic member 274 to move toward or away from the other. FIG. 20 shows a change in strength of the second magnetic field sensed by the second magnetic member 274 in the lifting or lowering process of the lifting member 240 when there is one second magnetic member 274. For example, the second magnetic induction sensor 273 may be a Hall device, a tunnel magneto resistance sensor, or the like. A principle of the second magnetic induction sensor 273 is similar to those of the first magnetic induction sensor 271 and the first magnetic member 272, and details are not described again. Refer to FIG. 19. The storage chip may be further configured to store a second correspondence between the electrical signal of the second magnetic induction sensor 273 and a lifting or lowering position of the lifting member 240. The control member may obtain the second correspondence from the storage chip in advance, and perform an operation after obtaining the electrical signal of the second magnetic induction sensor 273, to obtain the lifting or lowering position of the lifting member 240, and determine whether the lifting member 240 lifts or lowers to a required position or is stuck.

When the control member determines that a distance between the lifting member 240 and the carrier member 210 increases, the control member controls the camera to move away from the carrier base 211, to lift the camera. When the control member determines that a distance between the lifting member 240 and the carrier member 210 decreases, the control member controls the camera to move toward the carrier base 211, to lower the camera. In this case, the camera can lift or lower through cooperation between the distance detection member and the control member.

For example, the second magnetic member 274 may be connected to the carrier member 210, and the second magnetic induction sensor 273 may be connected to the lifting member 240. Alternatively, the second magnetic member 274 may be connected to the lifting member 240, and the second magnetic induction sensor 273 may be connected to the carrier member 210. Because the second magnetic induction sensor 273 is electrically connected to the control member, a structure for an electrical connection needs to be disposed between the second magnetic induction sensor 273 and the control member. When the second magnetic induction sensor 273 is connected to the carrier member 210, the structure for an electrical connection is not pulled and is not prone to damage in the lifting or lowering process when the second magnetic induction sensor 273 is connected to the lifting member 240.

In this embodiment of this application, an example in which the second magnetic member 274 is connected to the lifting member 240, and the second magnetic induction sensor 273 is connected to the carrier member 210 is used for description. For example, refer to FIG. 9. A second accommodating groove 242 may be disposed on the outer wall surface of the lifting member 240, and the second accommodating groove 242 is used to accommodate the second magnetic member 274, to facilitate mounting of the second magnetic member 274. In some examples, the second magnetic induction sensor 273 may be disposed on the carrier base 211, so that a structure of the carrier member 210 is simple. In some other examples, refer to FIG. 15 and FIG. 17. The carrier member 210 may include the carrier circuit board 212, the carrier circuit board 212 may include a second carrier circuit board 2122. The second magnetic induction sensor 273 is connected to the second carrier circuit board 2122, and the second magnetic induction sensor 273 may be electrically connected to the control member through the second carrier circuit board 2122. For example, the second magnetic induction sensor 273 may be soldered to the second carrier circuit board 2122 through surface mount soldering. The second carrier circuit board 2122 and the lifting member 240 may be oppositely disposed and spaced apart, to avoid mutual wear between the lifting member 240 and the second carrier circuit board 2122 in the lifting or lowering process. The second magnetic induction sensor 273 may be located on a side that is of the second carrier circuit board 2122 and that faces the second magnetic member 274. The second magnetic member 274 may be located on a side that is of the lifting member 240 and that faces the second magnetic induction sensor 273. This can reduce impact of the second carrier circuit board 2122 and the lifting member 240 on magnetic field induction between the second magnetic member 274 and the second magnetic induction sensor 273. The second carrier circuit board 2122 may be an FPC or a PCB. The second carrier circuit board 2122 is connected to a static mechanical part like the first cover body, the rear cover 120, or the middle frame 130, to support the second carrier circuit board 2122. The first carrier circuit board 2121 may be connected to the second carrier circuit board 2122, to simplify connections between the first carrier circuit board 2121 and the control member, and between the second carrier circuit board 2122 and the control member. The first carrier circuit board 2121 and the second carrier circuit board 2122 may alternatively be independent of each other, and are both connected to the control member.

For example, refer to FIG. 17 and FIG. 18. The lifting apparatus may further include a second magnetic isolator 276. The second magnetic isolator 276 is configured to reduce interference from an external magnetic field to the second magnetic induction sensor 273. For example, the second magnetic isolator 276 may be a metal member or another mechanical part that can isolate a magnetic field. In an implementation in which the second magnetic induction sensor 273 is connected to the side that is of the second carrier circuit board 2122 and that faces the second magnetic member 274, the second magnetic isolator 276 may be located on a side that is of the second carrier circuit board 2122 and that is away from the second magnetic member 274, to avoid interference from an external magnetic field on the side that is of the second carrier circuit board 2122 and that is away from the second magnetic member 274 to the second magnetic induction sensor 273. The second carrier circuit board 2122 may be connected to the first cover body, the rear cover 120, the middle frame 130, or the like through the second magnetic isolator 276. The second magnetic isolator 276 may further improve mechanical strength of the second carrier circuit board 2122. The second magnetic isolator 276 may be connected to the second carrier circuit board 2122 before the second magnetic induction sensor 273, to facilitate subsequent mounting of the second magnetic induction sensor 273. This further improves fastening strength of the second magnetic induction sensor 273, and prevents the second magnetic induction sensor 273 from falling off during a fall, squeeze, or collision of the lifting apparatus. For example, the second magnetic isolator 276 may be connected to the second carrier circuit board 2122 through bonding, soldering, or the like.

Refer to FIG. 19. The first magnetic induction sensor 271, the first magnetic member 272, the second magnetic induction sensor 273, the second magnetic member 274, and the storage chip may jointly form a position detection module 300a. The position detection module 300a cooperates with the control member to determine positions of the lifting member 240 and the rotating member 230 and whether the lifting member 240 and the rotating member 230 are stuck.

The following describes the first drive assembly provided in embodiments of this application.

The first drive assembly may include but is not limited to manners such as electric, pneumatic, hydraulic, worm drive, gear drive, electromagnetic drive, electro-hydraulic drive, pneumatic-hydraulic drive, and electromagnetic-hydraulic drive. In addition, the second drive assembly is similar to the first drive assembly, and details are not described again.

The first drive assembly may be located on the outer side of the rotating member 230, so that a size of the rotating member 230 is small. This facilitates miniaturization of the camera apparatus 200. Refer to FIG. 21 and FIG. 22. At least a part of a side that is of the first drive assembly and that faces the lifting member 240 is covered with a drive cover 295, to support and protect the part of the first drive assembly. For example, the drive cover 295 may be fastened to the carrier base 211 through a screw, adhesive dispensing, welding, or the like.

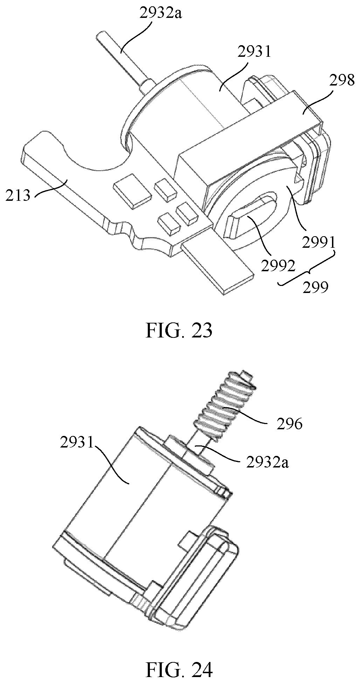

Refer to FIG. 18. The first drive assembly may include a drive member 293. The drive member 293 is configured to drive the rotating member 230 to rotate, and the drive member 293 may include but is not limited to a micro motor. The drive member 293 may include a drive member body 2931 and a drive shaft 2932. The drive shaft 2932 is rotatably connected to the drive member body 2931. Refer to FIG. 23 and FIG. 24. The drive shaft 2932 includes a first shaft end 2932a and a second shaft end that are opposite to each other. The drive shaft 2932 is inserted into the drive member body 2931. The first shaft end 2932a extends out of the drive member body 2931, and the first shaft end 2932a fits with the rotating member 230.

In some embodiments, refer to FIG. 5 and FIG. 6. An extension direction of the drive shaft 2932 of the drive member 293 may be perpendicular to the Z direction (on the XY plane), and the drive member 293 is horizontally placed on the carrier base 211, to reduce the thickness of the camera apparatus 200. In this case, a first transmission member may be disposed on the drive shaft 2932 of the drive member 293. The first transmission member may be a worm 296. The first drive assembly may include a second transmission member that fits with the worm 296. The second transmission member may include a worm gear 291. The worm 296 drives the worm gear 291 to rotate on the XY plane. The second transmission member may include a first gear and a second gear 2922. The first gear and the worm gear 291 are coaxially disposed and rotate synchronously. The gear structure 233 may be disposed on a periphery of the rotating member 230. The second gear 2922 meshes with both the first gear and the gear structure 233. The drive member 293 sequentially drives the worm 296, the worm gear 291, the first gear, the second gear 2922, and the gear structure 233 to rotate, to drive the rotating member 230 to rotate. In some other examples, the first gear may mesh with the gear structure 233, to drive the rotating member 230 to rotate. In this case, the second gear 2922 does not need to be disposed, and a structure of the first drive assembly is simple.

In some other examples, the second transmission member may further include a third gear 2923. The third gear 2923 may be coaxially disposed with the second gear 2922, and mesh with the first gear on the XY plane. The first gear is connected to the second gear 2922 through the third gear 2923. Alternatively, the third gear 2923 may mesh with both the first gear and the second gear 2922. For example, there may be at least one third gear 2923. When there are a plurality of third gears 2923, the plurality of third gears 2923 may mesh with each other on the XY plane, or some or all of the plurality of third gears 2923 may be coaxially disposed. Sizes of the gears may be the same, partially different, or completely different.

The worm gear 291 fits with the worm 296, so that rotation of the drive shaft 2932 may be redirected to rotation of the worm gear 291 along the XY plane. A plurality of gears (the first gear, the second gear 2922, and the third gear 2923) fit with each other, so that high-speed and small-torque rotation of the drive shaft 2932 is transformed into low-speed and large-torque rotation.

In some embodiments, the drive shaft 2932 of the drive member 293 may extend in the Z direction (FIG. 7), and the drive member 293 is vertically placed on the carrier base 211. The first transmission member is coaxially disposed on the drive shaft 2932 (FIG. 18) of the drive member 293. The first transmission member may be a drive gear, and the drive gear may mesh with the gear structure 233, to drive the rotating member 230 to rotate. In some other examples, the first drive assembly may include the second transmission member linked to the first transmission member. The second transmission member may include the first gear. The first gear mesh with both the drive gear and the gear structure 233 on the XY plane. The drive member 293 sequentially drives the drive gear, the first gear, and the gear structure 233 to rotate. In some other examples, the second transmission member may include the second gear 2922. The second gear 2922 and the first gear may be coaxially disposed and rotate synchronously. The first gear meshes with the drive gear, and the second gear 2922 meshes with the gear structure 233. Alternatively, the first gear meshes with both the second gear 2922 and the drive gear on the XY plane, and the second gear 2922 meshes with the gear structure 233. In some other examples, the second transmission member may further include the third gear 2923. A disposition manner of the third gear 2923 is similar to implementations of the worm 296 and the worm gear 291, and details are not described again.

The worm gear 291 and any one or more of the plurality of gears (the first gear, the second gear 2922, and the third gear 2923) may be rotatably connected to the carrier base 211. For example, refer to FIG. 7. The plurality of gears may be rotatably connected to the carrier base 211 through the gear shaft 297, one end of the gear shaft 297 is connected to the drive cover 295, and the other end of the gear shaft 297 is connected to the carrier base 211. For example, refer to FIG. 23. The drive member 293 may further include an anti-creep member 299. The anti-creep member 299 includes an elastic part 2992 and a fastening part 2991 that are connected to each other. The fastening part 2991 is connected to a side that is of the drive member body 2931 and that is away from the first shaft end 2932a. The second shaft end may extend out of a side that is of the drive member body 2931 and that is away from the first shaft end 2932a. The elastic part 2992 abuts against the second shaft end. For example, the elastic part 2992 abuts against a side that is of the second shaft end and that is away from the drive member body 2931. In an implementation in which the worm 296 is disposed on the drive shaft 2932, when the worm 296 drives the worm gear 291 to rotate, the worm gear 291 applies a reaction force in an axial direction of the worm 296 (equivalent to an axial direction of the drive shaft 2932) to the worm 296, and the reaction force is likely to cause the drive shaft 2932 to creep in the axial direction of the worm 296. The elastic part 2992 abuts against the second shaft end, and the elastic part 2992 applies an elastic acting force to the second shaft end, to alleviate creeping of the drive shaft 2932 in the axial direction of the worm 296, and avoid sticking cause by the drive shaft 2932 squeezing a mechanical part inside the drive member body 2931. In addition, the anti-creep member 299 may further protect the second shaft end.

For example, refer to FIG. 24. The first shaft end 2932a may be inserted into the first transmission member (the worm 296 or the drive gear) in the axial direction of the drive shaft 2932, and the first shaft end 2932a may be in interference fit with the first transmission member. Alternatively, the first shaft end 2932a is welded to the first transmission member. Alternatively, the first shaft end 2932a and the first transmission member may be integrally formed, so that connection stability between the first transmission member and the first shaft end 2932a is high. When the first shaft end 2932a and the first transmission member are two independent mechanical parts, the first transmission member needs to be assembled on the first shaft end 2932a, and deformation or misalignment of the first transmission member is likely to occur. Therefore, when the drive shaft 2932 rotates at a high speed, the first transmission member is likely to creep and swing perpendicular to the drive shaft 2932, leading to a loss of transmission efficiency between the first transmission member and the second transmission member, and an increase in noise.

The first drive assembly may include a drive circuit board 298. The drive circuit board 298 is electrically connected to the control member, and the control member is configured to control activating or deactivating of the first drive assembly. The drive circuit board 298 may be a flexible circuit board, and the drive circuit board 298 may be connected to at least one of the first carrier circuit board 2121 and the second carrier circuit board 2122. Alternatively, the drive circuit board 298, the first carrier circuit board 2121, and the second carrier circuit board 2122 may be independent of each other, and are all connected to the control member. The first drive assembly may be sequentially electrically connected to the driver chip, a power supply chip, and the battery 150 through the drive circuit board 298. The driver chip and the power supply chip may be disposed on the main circuit board 140, or may be disposed on another sub-circuit board 213 (FIG. 18) independent of the main circuit board 140. The sub-circuit board 213 may be disposed in the lifting apparatus, may be connected to the carrier base 211, and may be located on a side that is of the carrier circuit board 212 and that faces the lifting member 240. In addition, the sub-circuit board 213 is electrically connected to the drive circuit board 298.

Refer to FIG. 19. The driver chip, the power supply chip, and the drive member 293 jointly form a power module 300b. The first transmission member and the second transmission member jointly form a transmission module 300c. The rotating member 230, the lifting member 240, the top protective cover 281, and the like jointly form a lifting module 300d. The power module 300b may be configured to convert electric energy of the battery 150 into mechanical energy, to provide a power source for movement of the transmission module 300c and the lifting module 300d. A function of the power supply chip is to boost a voltage (usually 3.5 V to 4.5 V) of the battery 150 to a working voltage (usually 5 V to 7 V) of the driver chip through direct current to direct current (Direct Current to Direct Current, DC-DC for short) boost conversion. A function of the driver chip is to convert, through DC-DC power conversion, a direct current voltage provided by the power supply chip into a pulse-width modulation (Pulse-Width Modulation, PWM for short) pulse voltage required by the drive member 293. A function of the drive member 293 is to convert electric energy into mechanical energy under driving of the PWM pulse voltage, so that the drive shaft 2932 of the drive member 293 rotates at a high speed. A working process in which the first drive assembly drives the lifting member 240 to lift or lower may be as follows: The control member sends a control instruction to the driver chip; the driver chip performs power conversion based on the voltage provided by the power supply chip, and outputs the PWM pulse voltage; and the drive member 293 converts the electric energy into the mechanical energy under an action of the PWM pulse voltage, to drive the first transmission member to rotate. The first transmission member sequentially drives the second transmission member and the gear structure 233 to rotate, so that the rotating member 230 rotates and drives the lifting member 240 to lift or lower.

In the description of embodiments of this application, it should be noted that, unless otherwise explicitly stipulated and restricted, terms "mounting", "joint connection", and "connection" should be understood broadly, which, for example, may be a fixed connection, or may be an indirect connection by using a medium, or may be an internal communication between two elements, or may be an interactive relationship between two elements. A person of ordinary skill in the art may understand specific meanings of the foregoing terms in embodiments of this application based on specific cases.

The terms such as "first", "second", "third", "fourth", and the like (if any) are intended to distinguish between similar objects but do not necessarily indicate a specific order or sequence.

Finally, it should be noted that the foregoing embodiments are merely used to describe the technical solutions in embodiments of this application, but not to limit the technical solutions. Although embodiments of this application are described in detail with reference to the foregoing embodiments, a person of ordinary skill in the art should understand that the technical solutions recorded in the foregoing embodiments may still be modified, or some or all of technical features thereof may be equivalently replaced. However, these modifications or replacements do not depart from the scope of the technical solutions in embodiments of this application.

## Claims

1. A lifting apparatus, comprising a carrier member (210), a rotating member (230), a lifting member (240), a first magnetic induction sensor (271), and a first magnetic member (272), wherein the rotating member (230) is rotatably disposed on the carrier member (210), the rotating member (230) and the lifting member (240) fit with each other, and the rotating member (230) is configured to drive the lifting member (240) to lift or lower in a rotation process;
one of the first magnetic induction sensor (271) and the first magnetic member (272) is connected to the rotating member (230), and the other of the first magnetic induction sensor (271) and the first magnetic member (272) is connected to the carrier member (210); and
the first magnetic member (272) is configured to generate a first magnetic field, the first magnetic induction sensor (271) is located in the first magnetic field, and the rotating member (230) is configured to drive, in the rotation process, one of the first magnetic induction sensor (271) and the first magnetic member (272) to move toward or away from the other.

2. The lifting apparatus according to claim 1, wherein there are two first magnetic members (272), the two first magnetic members (272) are spaced apart in a circumferential direction of the rotating member (230), and the rotating member (230) is configured to drive, in the rotation process, the first magnetic induction sensor (271) and one of the two first magnetic members (272) to move toward each other, and the first magnetic induction sensor (271) and the other of the two first magnetic members (272) to move away from each other.

3. The lifting apparatus according to claim 2, wherein south pole-to-north pole directions of the two first magnetic members (272) are opposite to each other in an axial direction of the rotating member (230); or
south pole-to-north pole directions of the two first magnetic members (272) are the same as the circumferential direction of the rotating member (230).

4. The lifting apparatus according to any one of claims 1 to 3, wherein the carrier member (210) comprises a carrier base (211) and a carrier circuit board (212) that are connected to each other, and the rotating member (230) is rotatably disposed on the carrier base (211).

5. The lifting apparatus according to claim 4, wherein the carrier circuit board (212) comprises a first carrier circuit board (2121), the first magnetic induction sensor (271) is connected to the first carrier circuit board (2121), and the first magnetic member (272) is connected to the rotating member (230).

6. The lifting apparatus according to claim 5, further comprising a first magnetic isolator (275), wherein the first magnetic induction sensor (271) is located on a side that is of the first carrier circuit board (2121) and that faces the first magnetic member (272), and the first magnetic isolator (275) is located on a side that is of the first carrier circuit board (2121) and that is away from the first magnetic member (272).

7. The lifting apparatus according to claim 4, comprising a second magnetic induction sensor (273) and a second magnetic member (274), wherein one of the second magnetic induction sensor (273) and the second magnetic member (274) is connected to the lifting member (240), and the other of the second magnetic induction sensor (273) and the second magnetic member (274) is connected to the carrier member (210); and
the second magnetic member (274) is configured to generate a second magnetic field, the second magnetic induction sensor (273) is located in the second magnetic field, and the lifting member (240) is configured to drive, in a lifting or lowering process, one of the second magnetic induction sensor (273) and the second magnetic member (274) to move toward or away from the other.

8. The lifting apparatus according to claim 7, wherein the carrier circuit board (212) comprises a second carrier circuit board (2122), the second magnetic induction sensor (273) is connected to the second carrier circuit board (2122), and the second magnetic member (274) is connected to the lifting member (240).

9. The lifting apparatus according to claim 8, further comprising a second magnetic isolator (276), wherein the second magnetic induction sensor (273) is located on a side that is of the second carrier circuit board (2122) and that faces the second magnetic member (274), and the second magnetic isolator (276) is located on a side that is of the second carrier circuit board (2122) and that is away from the second magnetic member (274).

10. The lifting apparatus according to any one of claims 1 to 3, wherein a guide member (250) is disposed on one of the rotating member (230) and the lifting member (240), a guide passage (260) is disposed on the other of the rotating member (230) and the lifting member (240), the guide passage (260) is tilted relative to a lifting direction or a lowering direction of the lifting member (240), a protrusion (253) is disposed on the guide member (250), and the protrusion (253) is inserted into the guide passage (260), and reciprocates in an extension direction of the guide passage (260).

11. The lifting apparatus according to claim 10, wherein in the lifting direction or the lowering direction of the lifting member (240), an inner wall surface of the guide passage (260) comprises a first drive surface (261) and a second drive surface (262) that are oppositely disposed and spaced apart, and the protrusion (253) is located between the first drive surface (261) and the second drive surface (262); and
at least one of the first drive surface (261) and the second drive surface (262) is a plane; or
at least one of the first drive surface (261) and the second drive surface (262) is a curved surface, and the curved surface is bent toward the lowering direction of the lifting member (240).

12. The lifting apparatus according to any one of claims 1 to 3, comprising a drive member (293), wherein the drive member (293) comprises a drive member body (2931) and a drive shaft (2932), the drive shaft (2932) is rotatably connected to the drive member body (2931), the drive shaft (2932) comprises a first shaft end (2932a) and a second shaft end that are opposite to each other, and the first shaft end (2932a) fits with the rotating member (230).

13. The lifting apparatus according to claim 12, wherein the drive member (293) further comprises an anti-creep member (299), the anti-creep member (299) comprises an elastic part (2992) and a fastening part (2991) that are connected to each other, the fastening part (2991) is connected to a side that is of the drive member body (2931) and that is away from the first shaft end (2932a), and the elastic part (2992) abuts against the second shaft end.

14. The lifting apparatus according to claim 12, further comprising a worm (296), wherein the first shaft end (2932a) is inserted into the worm (296) in an axial direction of the worm (296); and
the first shaft end (2932a) is in interference fit with the worm (296), or the first shaft end (2932a) is welded to the worm (296), or the first shaft end (2932a) and the worm (296) are integrated.

15. A camera apparatus, comprising a camera module (220) and the lifting apparatus according to any one of claims 1 to 14, wherein the camera module (220) is connected to the lifting apparatus.

16. An electronic device, comprising a housing and the camera apparatus according to claim 15, wherein the camera apparatus is at least partially located in the housing.
